(19) **Europäisches Patentamt / European Patent Office / Office européen des brevets**

(11) **EP 4 648 483 A1**

(12) **EUROPEAN PATENT APPLICATION**

(43) Date of publication:
**12.11.2025 Bulletin 2025/46**

(21) Application number: **25175615.1**

(22) Date of filing: **12.05.2025**

(51) International Patent Classification (IPC):
**H04W 48/12** (2009.01)  **H04W 48/14** (2009.01)
**H04W 52/02** (2009.01)  **H04W 74/0833** (2024.01)

(52) Cooperative Patent Classification (CPC):
**H04W 48/12; H04W 48/14; H04W 52/0229;**
H04W 74/0833

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **10.05.2024 US 202463645589 P
20.09.2024 US 202463697090 P
07.05.2025 US 202519201020**

(71) Applicant: **Samsung Electronics Co., Ltd.
Suwon-si, Gyeonggi-do 16677 (KR)**

(72) Inventors:
• **HU, Liang
San Jose, CA, 95134 (US)**
• **SARTORI, Philippe Jean Marc Michel
San Jose, CA, 95134 (US)**

(74) Representative: **Kuhnen & Wacker
Patent- und Rechtsanwaltsbüro PartG mbB
Prinz-Ludwig-Straße 40A
85354 Freising (DE)**

(54) **SYSTEM AND METHOD FOR EARLY INDICATION AND CONFIGURATION OF ON-DEMAND SYSTEM INFORMATION FOR IDLE OR INACTIVE USER EQUIPMENT**

(57) A system and method performed by a user equipment, UE, in a wireless communication system are disclosed. The method includes receiving (1301a), from a network node, an indication of a synchronization signal block, SSB, associated with an ondemand system information block 1, OD-SIB 1, cell provided in a master information block, MIB, or a reserved value in a search space configuration; determining (1302a), based on a wake-up signal, WUS, configuration from an anchor cell, whether the SSB corresponds to an OD-SIB1 cell; transmitting (1303a), to the network node, a request for OD-SIB1 transmission based on the determination; and receiving (1304a) an OD-SIB 1 from the OD-SIB1 cell.

Receive indication of SSB associated with OD-SIB1 cell
1301a

↓

Determine whether SSB corresponds to OD-SIB1 cell
1302a

↓

Transmit a request for OD-SIB1 transmission
1303a

↓

Receive OD-SIB1 from OD-SIB1 cell
1304a

**FIG. 13A**

EP 4 648 483 A1

**Description**

**TECHNICAL FIELD**

The disclosure generally relates to wireless communication systems and network energy efficiency. More particularly, the subject matter disclosed herein relates to improvements to the transmission of system information block 1 (SIB1) in cellular networks by introducing an on-demand SIB1 mechanism for idle and inactive user equipment (UEs) to reduce network power consumption.

**SUMMARY**

Wireless communication networks have evolved to accommodate increasing data demands, leading to denser deployments, larger operating bandwidths, and the widespread use of multi-antenna technologies. While these advancements enhance performance, they also contribute to significant power consumption, which has become a major operational expense for network operators. Traditionally, power-saving measures have primarily focused on reducing energy consumption at the UE side, with limited efforts directed at optimizing network-side energy efficiency.

To address this challenge, 3rd Generation Partnership Project (3GPP) introduced power-saving features at the network level in Release (Rel) 18, primarily targeting UEs in RRC_CONNECTED mode. However, a significant gap remains because UEs in RRC_IDLE and RRC_INACTIVE states also periodically access system information, which contributes to unnecessary energy consumption at the network side. Some network operations rely on periodic transmission of SIB1, ensuring that all idle and inactive UEs receive necessary system information. While this guarantees seamless connectivity, it results in continuous energy expenditure even when no UEs are actively requesting system information.

One issue with this periodic broadcasting approach is its inefficiency in scenarios where few or no UEs require SIB1 at a given time. The lack of an adaptive mechanism to transmit SIB 1 only on demand leads to unnecessary power consumption and reduced network energy efficiency. Additionally, in the absence of an explicit procedure for on-demand SIB1 (also referred to as OD-SIB 1) requests, idle and inactive UEs lack a means to trigger its transmission, making network-side energy savings difficult to achieve without negatively impacting connectivity and accessibility.

To overcome these issues, systems and methods are described herein for on-demand transmission of SIB 1, allowing a UE to request system information dynamically when needed rather than relying on continuous network broadcasts. The present disclosure provides early indication mechanisms that enable idle and inactive UEs to determine whether a cell operates with on-demand SIB1 or follows the traditional periodic transmission model. It also introduces an uplink wake-up signal (WUS) configuration that allows UEs to trigger the transmission of SIB1 when necessary, thereby reducing unnecessary network broadcasts. Adaptive resource allocation techniques are implemented to efficiently configure control resource sets and search spaces to manage on-demand SIB 1 transmission while maintaining backward compatibility with legacy UEs. Additionally, the disclosure also includes network coordination procedures that enable inter-cell communication between anchor and non-anchor cells, ensuring that SIB1 transmission occurs efficiently based on UE requests. Various deployment scenarios are supported to integrate on-demand SIB1 seamlessly into existing cellular networks while preserving compatibility with standardized procedures.

The described approach improves upon previous methods by reducing network-side energy consumption through the elimination of unnecessary SIB1 transmissions while maintaining reliable access for UEs in idle and inactive states. By using wake-up signaling, intelligent resource allocation, and adaptive network coordination, the proposed techniques enhance the efficiency, flexibility, and scalability of next-generation wireless networks. These improvements contribute to greater sustainability, reduced operational costs for network operators, and improved overall network performance without compromising UE accessibility.

According to an embodiment of the present disclosure, a method performed by a UE in a wireless communication system is provided. The method includes receiving, from a network node, an indication of a synchronization signal block (SSB) associated with an on-demand system information block 1 (OD-SIB 1) cell provided in a master information block (MIB) or as a reserved value in a search space configuration; determining, based on a wake-up signal (WUS) configuration from an anchor cell, whether the SSB corresponds to an OD-SIB 1 cell; transmitting, to the network node, a request for OD-SIB 1 transmission based on the determination; and receiving an OD-SIB 1 from the OD-SIB 1 cell.

According to another embodiment of the present disclosure, a UE is provided. The UE includes a processor and a memory storing instructions that, when executed by the processor, cause the UE to receive, from a network node, an indication of an SSB associated with an OD-SIB1 cell provided in an MIB or as a reserved value in a search space configuration; determine, based on a WUS configuration from an anchor cell, whether the SSB corresponds to an OD-SIB 1 cell; transmit, to the network node, a request for OD-SIB 1 transmission based on the determination; and receive an OD-SIB 1 from the OD-SIB 1 cell.

According to another embodiment of the present disclosure, a method performed by a UE in a wireless communication system is provided. The method includes transmitting, to a network node, a WUS to initiate an OD-SIB 1 request; receiving, from the network node, an indication of an OD-SIB 1 transmission opportunity corresponding to the transmitted WUS; and decoding an OD-SIB 1 based on the received indication.

## BRIEF DESCRIPTION OF THE DRAWING

In the following section, the aspects of the subject matter disclosed herein will be described with reference to exemplary embodiments illustrated in the figures, in which:

FIGS. 1A-1C illustrate three different deployment scenarios for on-demand SIB1 transmission in a wireless communication system, according to various embodiments;

FIG. 2 is a network deployment scenario in which an anchor cell serves as the primary connection point for the UE while a non-anchor cell handles the transmission of on-demand SIB1, according to an embodiment;

FIG. 3 is a network deployment scenario in which the anchor cell has the capability to trigger the non-anchor cell to transmit on-demand SIB1, according to an embodiment;

FIG. 4 is a network deployment scenario in which the anchor cell handles the entire on-demand signaling process, according to an embodiment;

FIG. 5 is a network deployment scenario where the on-demand SIB1 operation is independent of the anchor cell, according to an embodiment;

FIG. 6 is a flowchart illustrating a method of a UE identifying, requesting, and receiving OD-SIB1, according to an embodiment;

FIG. 7 is a flowchart illustrating a network energy saving (NES) UE operation when it first detects an anchor cell, according to an embodiment;

FIG. 8 is a flowchart illustrating an NES UE operation for determining if OD-SIB 1 is enabled, according to an embodiment;

FIG. 9 is a flowchart illustrating an NES UE operation for determining if OD-SIB 1 is enabled, according to an embodiment;

FIG. 10 is a flowchart illustrating an NES UE operation for SSB indication via off-sync raster, according to an embodiment;

FIG. 11 is a flowchart illustrating an NES UE operation for detecting and selecting a suitable cell, according to an embodiment;

FIG. 12 is a flowchart illustrating an NES UE operation for early identification of an OD-SIB 1 NES cell, according to an embodiment;

FIGS. 13A-13B are flowcharts illustrating an NES UE operation for early indication and configuration of OD-SIB 1, according to various embodiments;

FIG. 14 is a block diagram of an electronic device in a network environment, according to an embodiment; and

FIG. 15 is a block diagram of a system including a UE and a network node in communication with each other, according to an embodiment.

## DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

"Network node" as used herein refers to an entity in a wireless communication system that facilitates network operations, including transmitting and receiving data, managing connections, and coordinating wireless access. Some examples of "network node" are a base station, a gNB, an eNB, a relay node, or a network server.

"On-demand SIB1" (also referred to as OD-SIB 1) as used herein refers to a system information transmission mechanism where SIB1 is not periodically broadcast but instead transmitted upon request from a UE. Some examples of "on-demand system information block 1" are OD-SIB 1 transmissions triggered by a WUS, OD-SIB 1 transmissions initiated by a physical random access channel (PRACH) request, and OD-SIB 1 scheduling via system information radio network temporary identifier (SI-RNTI)- NES.

"Synchronization signal block" as used herein refers to a transmission unit in a wireless network that includes synchronization signals and system information to help the UE detect and synchronize with a cell. Some examples of "synchronization signal block" are a primary synchronization signal (PSS), a secondary synchronization signal (SSS), and a physical broadcast channel (PBCH) that collectively aid in cell search and initial access.

"WUS" as used herein refers to a signal transmitted by a UE to indicate its need for SI or network access, prompting the network to become active. Some examples of "WUS" are a UL WUS transmission to an OD-SIB 1 cell, a PRACH-based WUS for requesting OD-SIB1, and a contention-free or contention-based wake-up request.

"Cell" as used herein refers to a logical radio access entity defined by its transmission configuration, frequency, and identity parameters, through which a network node provides wireless coverage and signaling. Some examples of "cell" are a legacy cell that transmits SIB 1 periodically, an OD-SIB 1 cell that supports OD-SIB 1 delivery, and an NES cell that operates under energy-saving signaling configurations.

"Anchor cell" (also referred to as Cell A) as used herein refers to a cell that serves as a primary reference for a UE and provides assistance information, such as a WUS configuration and OD-SIB 1 configuration, for accessing non-anchor cells. Some examples of "anchor cell" are a macro cell coordinating OD-SIB1 transmissions and a legacy cell providing NES UEs with WUS configurations.

The present disclosure introduces procedures and signaling methods to support on-demand SSB transmission for secondary cells (SCells) when a UE is operating in a connected mode with carrier aggregation (CA) in either intra-band or inter-band configurations. The method includes various triggering mechanisms, such as an UL WUS transmitted using an existing signal or channel, indications of cell activation or deactivation via backhaul communication, or direct signaling for SCell activation and deactivation. This on-demand SSB transmission allows a UE to perform time and frequency synchronization, conduct layer 1 and layer 3 measurements, and activate an SCell while being supported in both frequency range 1 (FR1) and frequency range 2 (FR2) in non-shared spectrum environments.

To enhance network energy savings, the disclosure also provides procedures for enabling on-demand SIB1 transmission for UEs in an idle or inactive mode. The process involves triggering SIB1 transmission through a UL WUS sent via an existing signal or channel, as well as provisioning UEs with predefined WUS configurations. Additionally, information exchanges between gNBs (network nodes or cells) may be included to facilitate WUS configuration management. The proposed solutions ensure that UEs in idle or inactive states can efficiently request and receive SIB1 without requiring continuous periodic transmission, thereby reducing network-side energy consumption.

To further optimize energy efficiency, the disclosure describes adaptations to common signal and channel transmission procedures. These adaptations include modifications to the periodicity of SSB transmissions, adjustments to the timing of PRACH operations, and modifications to PRACH resource allocation in the spatial domain. In particular, the disclosure examines the feasibility of using non-uniform PRACH resources per SSB to optimize resource allocation. The adaptation of paging occasions is also considered, ensuring that paging signals are confined within a specified time domain without introducing additional latency. These optimizations aim to minimize the impact on legacy UEs while providing significant network energy-saving benefits.

Requirements necessary to implement these features are specified to ensure seamless integration into existing and future cellular network architectures. As part of these developments, the disclosure defines a specific case where a UE receives an UL WUS configuration from an anchor cell, transmits the UL WUS on a NES cell, and subsequently receives on-demand SIB1 from the NES cell. In this scenario, an anchor cell, also referred to as Cell A, is responsible for periodically transmitting its own SIB1, while an NES cell remains inactive until triggered by a UL WUS. Once activated, the NES cell transmits SIB1 when requested by a UE, ensuring minimal power consumption while maintaining accessibility. The system also specifies signaling exchanges between next-generation radio access network (NG-RAN) nodes to coordinate the configuration and management of UL WUS, ensuring efficient operation and minimal impact on legacy UEs.

To maintain backward compatibility and minimize disruptions to existing network operations, various embodiments ensure that modifications to SSB transmissions are avoided wherever possible. Additionally, the impact on legacy UEs is minimized, and any required changes to existing specifications are carefully managed to ensure a smooth transition to on-demand SIB1 functionality. The implementation of these techniques results in a more energy-efficient network that reduces unnecessary transmissions while preserving essential connectivity for UEs in idle and inactive states.

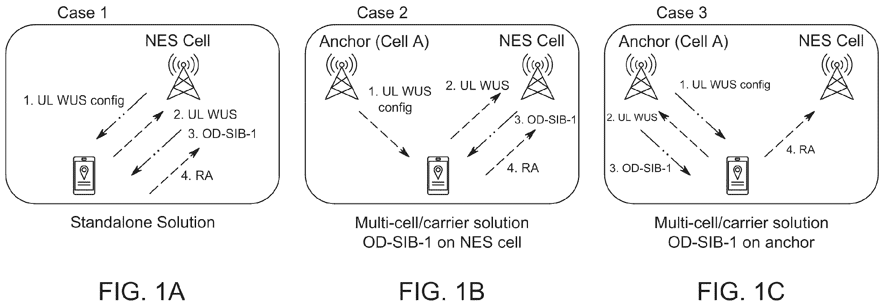

FIGS. 1A-1C illustrate three different deployment scenarios for on-demand SIB1 transmission in a wireless communication system, according to various embodiments.

Referring to FIGS. 1A-1C, each scenario represents a different method of implementing on-demand SIB1 using an NES cell and, in some cases, an anchor cell (Cell A) for coordination.

In FIG. 1A, labeled as "Standalone Solution," the NES cell operates independently, handling both UL WUS configuration and SIB1 transmission. In this scenario, the UE communicates directly with the NES cell, which remains in a low-power state until triggered by the UE's UL WUS. Once the WUS is received, the NES cell transmits on-demand SIB1 to the UE. This approach minimizes energy consumption by ensuring that the NES cell remains inactive unless a UE requests system information.

In FIG. 1B, labeled as "Multi-cell/carrier solution with OD-SIB 1 on NES cell," the process involves a Cell A, which is responsible for providing the UE with the UL WUS configuration. The UE first obtains this configuration from Cell A, then transmits the UL WUS to the NES cell. Upon receiving the WUS, the NES cell transmits the requested SIB1 to the UE. This configuration allows for greater flexibility, as the anchor cell manages signaling while the NES cell conserves power until needed.

In FIG. 1C, labeled as "Multi-cell/carrier solution with OD-SIB1 on anchor," the anchor cell itself takes responsibility for transmitting SIB1. The UE receives the UL WUS configuration from the anchor cell and transmits the UL WUS to request system information. Instead of the NES cell responding, the anchor cell transmits on-demand SIB1 to the UE. This approach further optimizes energy efficiency by centralizing control within the anchor cell while reducing the need for NES cell activity.

In a new radio (NR) system, SIB1 enables a UE to establish and maintain connectivity with a network. The process begins before a UE camps on a cell. During this phase, the UE performs a cell search by scanning for available cells and evaluating their signal strength and quality. Once potential cells are identified, the UE proceeds with cell reselection, which involves reading the minimum system information, including the MIB and SIB1, to determine whether a specific cell meets the necessary criteria for selection. Based on this information, the UE selects a suitable cell and camps on it.

After successfully camping on a cell, the UE continuously monitors paging messages and other short messages transmitted by the network. Paging monitoring ensures that the UE remains reachable for incoming communications while conserving power. Additionally, the UE monitors other relevant system information scheduled by SIB1, which may include parameters for cell reselection and other operational settings. The UE also performs periodic measurements to assess the signal quality and suitability of its current cell, allowing it to determine whether reselection to a different cell is necessary. These behaviors are dictated by the parameters contained in SIB1 and other related system information.

When a UE initiates a connection to transition from an idle or inactive state to an active state, it engages in the initial access procedure. This process begins with the transmission of message 1 (Msg1), which serves as the UE's initial access request to the network. Following this, the UE participates in the random access channel (RACH) procedure to establish a connection with the network. The RACH procedure is governed by parameters defined in SIB1 and other relevant system information.

Accordingly, the SIB1 serves three primary functions in NR systems. First, it allows the UE to determine whether a particular cell is suitable for camping during the cell selection and reselection process. Second, it provides the necessary system information for UEs operating in idle or inactive mode within a camped-on cell, enabling them to monitor paging and maintain network awareness. Third, it facilitates the execution of the RACH procedure, allowing UEs to transition into radio resource control (RRC) connected mode and establish a connection with the network.

In one or more Technical Specifications (TSs), MIB content (a combination "pdcch-ConfigSIB 1" and "$K_{SSB}$ (ssb-SubcarrierOffset)" value, described below) may indicate whether there is an associated SIB1 (cell-defining synchronization signal block ((CD-SSB)), or not (non-CD-SSB). In the former case, MIB may provide the required information for monitoring the associated SIB1 physical downlink control channel (PDCCH), while in the latter case, MIB may provide assisting information to the UE to find another frequency raster potentially with CD-SSB. MIB field descriptions for TS 38.331 are provided below in Table 1.

| <u>Table 1</u><br>*MIB* field descriptions |
|---|
| ***cellBarred***<br>Value *barred* means that the cell is barred, as defined in TS 38.304. This field is ignored by integrated access and backhaul (IAB)-mobile terminal (MT) and non-terrestrial network component radio (NCR)-MT. This field is ignored for connectivity to non-terrestrial network (NTN) or air-to-ground (ATG). |
| ***dmrs-TypeA-Position***<br>Position of (first) demodulation reference signal (DM-RS) for downlink (see TS 38.211, clause 7.4.1.1.2) and uplink (see TS 38.211, clause 6.4.1.1.3). |
| ***intraFreqReselection***<br>Controls cell selection/reselection to intra-frequency cells when the highest ranked cell is barred, or treated as barred by the UE, as specified in TS 38.304. This field is ignored by IAB-MT and NCR-MT. |
| ***pdcch-ConfigSIB1***<br>Determines a common *ControlResourceSet* (), a common search space and necessary PDCCH parameters. If the field *ssb-SubcarrierOffset* indicates that *SIB1* is absent, the field *pdcch-ConfigSIB1* indicates the frequency positions where the UE may find synchronization signal (SS)/PBCH block with *SIB1* or the frequency range where the network does not provide SS/PBCH block with *SIB1* (see TS 38.213, clause 13). |
| ***ssb-SubcarrierOffset***<br>Corresponds to $k_{synchronization\ signal\ block\ (SSB)}$ (see TS 38.213), which is the frequency domain offset between SSB and the overall resource block grid in number of subcarriers. (See TS 38.211, clause 7.4.3.1). For operation with shared spectrum channel access in frequency resource 1 (FR1) (see TS 37.213), this field corresponds to $\overline{k}_{SSB}$, and $k_{SSB}$ (see TS 38.211, clause 7.4.3.1); the least significant bit (LSB) of this field is used also for deriving the quasi-co-location (QCL) relation between SS/PBCH blocks as specified in TS 38.213, clause 4.1. The value range of this field may be extended by an additional most significant bit encoded within PBCH as specified in TS 38.213 [13].<br>This field may indicate that this cell does not provide *SIB1* and that there is hence no #0 configured in *MIB* (see TS 38.213, clause 13). In this case, the field *pdcch-ConfigSIB1* may indicate the frequency positions where the UE may (not) find a SS/PBCH with a control resource set and search space for *SIB1* (see TS 38.213 [13]). |

(continued)

| Table 1 |
|---|
| **MIB field descriptions** |
| ***subCarrierSpacingCommon***<br>Subcarrier spacing for *SIB1*, Message 2/4 (Msg2/4) and Message B (MsgB) for initial access, paging and broadcast SI-messages. If the UE acquires this *MIB* on an FR1 carrier frequency, the value subcarrier spacing *(scs)15 or 60* corresponds to 15 kilohertz (kHz) and the value *scs30or120* corresponds to 30 kHz. If the UE acquires this *MIB* on FR2 carrier frequency, the |
| value *scs15or60* corresponds to 60 kHz and the value *scs30or120* corresponds to 120 kHz. For operation with shared spectrum channel access in FR1 (see TS 37.213) and for operation in FR2-2, the subcarrier spacing for *SIB1,* Msg2/4 and MsgB for initial access, paging and broadcast system information (SI)-messages is same as that for the corresponding SSB. For operation with shared spectrum channel access, this field instead is used for deriving the QCL relation between SS/PBCH blocks as specified in TS 38.213, clause 4.1. |
| ***systemFrameNumber***<br>The 6 most significant bits (MSB) of the 10-bit system frame number (SFN). The 4 LSB of the SFN are conveyed in the PBCH transport block as part of channel coding (i.e. outside the *MIB* encoding), as defined in clause 7.1 in TS 38.212. |

In TS 38.213, Tables 2-3 are used to map an index to each of the #0 and Search Space#0.

**Table 2: Set of resource blocks and slot symbols for Type0-PDCCH search space set when {SS/PBCH block, PDCCH} SCS is {15, 15} kHz for frequency bands with minimum channel bandwidth 5 megahertz (MHz) or 10 MHz**

| Index | SS/PBCH block and multiplexing pattern | Number of RBs $N_{\mathrm{RB}}^{\mathrm{CORESET}}$ | Number of Symbols $N_{\mathrm{symb}}^{\mathrm{CORESET}}$ | Offset (RBs) |
|---|---|---|---|---|
| 0 | 1 | 24 | 2 | 0 |
| 1 | 1 | 24 | 2 | 2 |
| 2 | 1 | 24 | 2 | 4 |
| 3 | 1 | 24 | 3 | 0 |
| 4 | 1 | 24 | 3 | 2 |
| 5 | 1 | 24 | 3 | 4 |
| 6 | 1 | 48 | 1 | 12 |
| 7 | 1 | 48 | 1 | 16 |
| 8 | 1 | 48 | 2 | 12 |
| 9 | 1 | 48 | 2 | 16 |
| 10 | 1 | 48 | 3 | 12 |
| 11 | 1 | 48 | 3 | 16 |
| 12 | 1 | 96 | 1 | 38 |
| 13 | 1 | 96 | 2 | 38 |
| 14 | 1 | 96 | 3 | 38 |
| 15 | Reserved | | | |

**Table 3: Parameters for PDCCH monitoring occasions for Type0-PDCCH common search space (CSS) set - SS/PBCH block and multiplexing pattern 1 and FR1**

| Index | O | Number of search space sets per slot | M | First symbol index |
|---|---|---|---|---|
| 0 | 0 | 1 | 1 | 0 |

(continued)

| Index | O | Number of search space sets per slot | M | First symbol index |
|---|---|---|---|---|
| 1 | 0 | 2 | 1/2 | {0, if i is even}, { $N_{\text{symb}}^{CORESET}$, if i is odd} |
| 2 | 2 | 1 | 1 | 0 |
| 3 | 2 | 2 | 1/2 | {0, if *i* is even}, { $N_{\text{symb}}^{CORESET}$, if*i* is odd} |
| 4 | 5 | 1 | 1 | 0 |
| 5 | 5 | 2 | 1/2 | {0, if i is even}, { $N_{\text{symb}}^{CORESET}$, if i is odd} |
| 6 | 7 | 1 | 1 | 0 |
| 7 | 7 | 2 | 1/2 | {0, if *i* is even}, { $N_{\text{symb}}^{CORESET}$, if *i* is odd} |
| 8 | 0 | 1 | 2 | 0 |
| 9 | 5 | 1 | 2 | 0 |
| 10 | 0 | 1 | 1 | 1 |
| 11 | 0 | 1 | 1 | 2 |
| 12 | 2 | 1 | 1 | 1 |
| 13 | 2 | 1 | 1 | 2 |
| 14 | 5 | 1 | 1 | 1 |
| 15 | 5 | 1 | 1 | 2 |

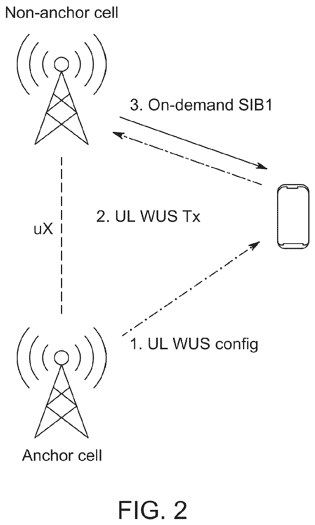

FIG. 2 is a network deployment scenario in which an anchor cell serves as the primary connection point for the UE while a non-anchor cell handles the transmission of on-demand SIB1, according to an embodiment.

Referring to FIG. 2, the anchor cell typically does not support the NES feature and primarily facilitates the configuration of the uplink WUS (UL WUS) for UEs operating in RRC_IDLE or RRC _INACTIVE states. In some embodiments, the anchor cell may itself be an NES cell that has already been activated. However, such a configuration is not required. The information related to on-demand signaling is exchanged between the anchor and non-anchor cells, and may be performed using backhaul signaling especially if the cells are not co-located.

Once the UE receives the UL WUS configuration from the anchor cell, it transmits a UL WUS to the non-anchor cell, requesting the transmission of SIB1. The non-anchor cell then processes this request and transmits the required on-demand SIB1 to the UE. In this configuration, the non-anchor cell should remain active to monitor WUSs, which results in increased energy consumption. Additionally, because the non-anchor cell handles SIB1 transmission, the UE switches between the anchor and non-anchor cell to receive the requested information.

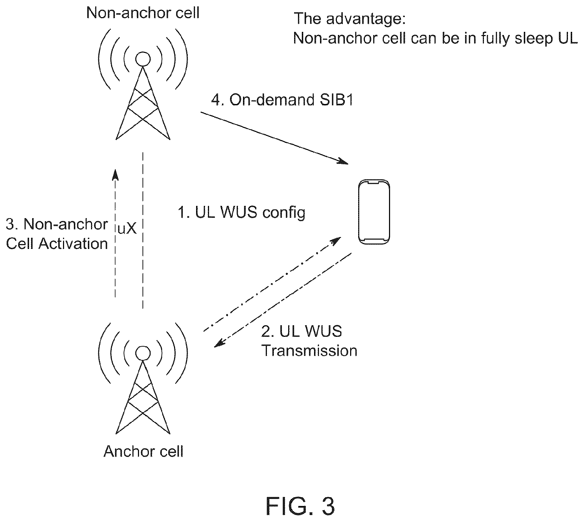

FIG. 3 is a network deployment scenario in which the anchor cell has the capability to trigger the non-anchor cell to transmit on-demand SIB1, according to an embodiment.

Referring to FIG. 3, in this configuration, the anchor cell manages both the UL WUS configuration and reception from UEs in RRC_IDLE or RRC _INACTIVE states. When a UE transmits a UL WUS, the anchor cell receives the request and subsequently triggers the non-anchor cell to transmit on-demand SIB1.

An advantage of this approach is that the non-anchor cell can remain in a fully sleep state until it is explicitly activated by the anchor cell. This reduces the network-side energy consumption for the non-anchor cell when there are no active SIB1 requests. However, similar to the scenario in FIG. 2, the UE still switches between the anchor and non-anchor cell to receive the transmitted on-demand SIB1 once the non-anchor cell has been activated.

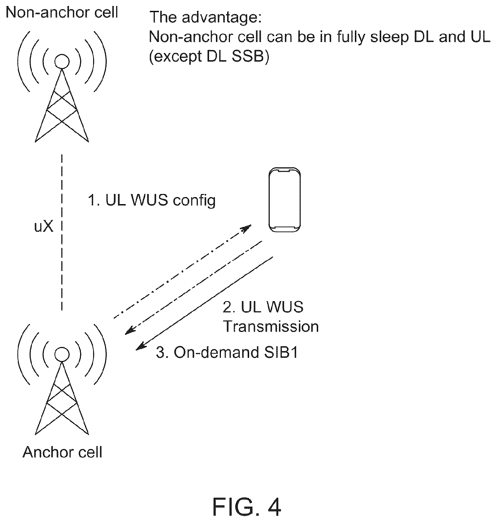

FIG. 4 is a network deployment scenario in which the anchor cell handles the entire on-demand signaling process, according to an embodiment.

Referring to FIG. 4, in this configuration the UE does not necessarily need to interact directly with the non-anchor cell. Here, the anchor cell first provides the UL WUS configuration to the UE. When the UE transmits a UL WUS, the anchor cell receives and processes the request. Instead of requiring the non-anchor cell to become active and transmit on-demand SIB1, the anchor cell retrieves the relevant SIB1 information from the non-anchor cell through backhaul signaling and delivers it to the UE.

This scenario provides improved network energy-saving performance for the non-anchor cell because the non-anchor cell does not need to wake up or transmit SIB1 directly. The energy consumption associated with the non-anchor cell comes from backhaul information exchange, which requires fewer resources. Additionally, this method reduces the need for UE switching between the anchor and non-anchor cell, simplifying UE operation and reducing latency.

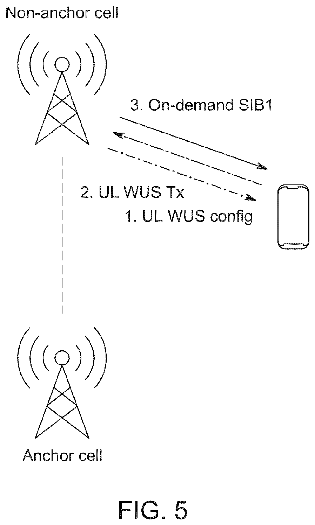

FIG. 5 is a network deployment scenario where the on-demand SIB1 operation is independent of the anchor cell, according to an embodiment.

Referring to FIG. 5, in this configuration, the non-anchor cell is responsible for handling on-demand signal configuration, receiving UL WUS transmissions, and delivering on-demand SIB1 to UEs in RRC_IDLE or RRC_INACTIVE states.

Unlike the case in FIG. 4, where the anchor cell facilitates information exchange and transmission, this scenario in FIG. 5 requires a direct signaling mechanism to guide the UE toward the correct non-anchor cell when sending a UL WUS. Once the UL WUS is transmitted, the non-anchor cell processes the request and sends on-demand SIB1 without requiring intervention from the anchor cell. However, this configuration necessitates UE switching between the anchor and non-anchor cell for the acquisition of on-demand SIB1.

This scenario allows for greater flexibility in the deployment of on-demand SIB1 but requires additional mechanisms to ensure efficient signaling and cell selection.

One of the primary challenges in implementing on-demand SIB1 in an NES environment is how an idle or inactive NES UE can identify whether a given NES cell operates with on-demand SIB1 or follows a traditional SIB1 transmission method. In a traditional network without NES operation, the UE knows where or how to find SIB1, as it is periodically transmitted. However, in an NES operation scenario, the UE may be required to actively request the transmission of SIB1. Since an NES UE is not expected to transmit before receiving SIB1, a mechanism is needed that enables the NES UE to determine whether a cell supports on-demand SIB1 or follows the traditional transmission method, and to efficiently obtain SIB1 while in idle mode.

Another issue arises in scenarios where there is a single deployed, isolated cell supporting on-demand SIB1. In such cases, it may be difficult to indicate the UL WUS configuration required to trigger on-demand SIB1 without requiring significant modifications to existing system structures. Typically, such information would be obtained through the PBCH or the MIB. While extending the MIB might be a feasible option for some fifth generation (5G) and sixth generation (6G) systems, it would be difficult to implement in traditional systems without resistance from industry stakeholders. Therefore, an efficient method should be introduced to indicate the UL WUS configuration with minimal or no modifications to the MIB.

Additionally, another challenge may be how to indicate controlResourceSetZero and searchSpaceSetZero for on-demand SIB1. In traditional systems, these parameters may be mapped using a predefined table specified in 3GPP TS 38.213, ensuring that UEs can locate the required resources for SIB1 acquisition. However, with on-demand SIB1, this mapping mechanism cannot be used since the presence of SIB1 is not guaranteed. This necessitates a new approach to indicate when on-demand SIB1 is being utilized.

A further issue may involve how an NES UE, after identifying an NES cell, can efficiently determine which Cell A (anchor cell) provides the corresponding UL WUS information necessary for requesting on-demand SIB1 on that specific NES cell. In practical deployments, multiple Cell A instances may exist, and each may or may not include the UL WUS configuration for a given NES cell. Without a proper mechanism, NES UEs may be forced to perform an inefficient blind search across multiple cells. Thus, a method is required to efficiently inform NES UEs about which Cell A includes the relevant UL WUS configuration for a particular NES cell, thereby improving system efficiency and reducing unnecessary signaling overhead.

Various embodiments disclosed herein provide solutions to the challenges described above, offering novel methods to enhance the efficiency of OD-SIB1 transmission in an NES environment.

According to an embodiment, techniques are introduced that enable idle or inactive NES UEs to determine whether a given NES cell operates with OD-SIB1 or follows a traditional periodic transmission model. Since NES UEs are not expected to transmit before receiving SIB1, existing methods do not allow them to determine the presence of OD-SIB1. The disclosure provides enhanced signaling mechanisms that allow NES UEs to identify OD-SIB1 operation early, ensuring they can efficiently request and acquire the required system information.

According to an embodiment, a method for UEs in idle or inactive mode to obtain UL WUS configuration in a single-cell deployment scenario without requiring significant modifications to system-level broadcasts is provided. In scenarios where an isolated cell supports OD-SIB1, traditional approaches relying on the MIB or PBCH may not be suitable, particularly for traditional systems. This solution introduces alternative signaling approaches that enable UEs to retrieve UL WUS configurations with minimal changes to existing broadcast structures, making it compatible with both legacy and future networks.

According to an embodiment, to address the issue of controlResourceSetZero and searchSpaceSetZero indication for OD-SIB1, the disclosure provides a mechanism that allows UEs to locate the necessary control resources despite the absence of periodic SIB1 transmission. In traditional systems, these parameters are mapped through predefined tables in 3GPP TS 38.213, which assume the presence of regularly broadcasted SIB1. Since OD-SIB1 does not follow this model, a different approach is introduced to dynamically indicate control resource allocation in NES deployments.

According to an embodiment, the disclosure introduces a method for indicating the transmission of OD-SIB1 using a new RNTI. Since traditional SI-RNTI is designed for periodic SIB1 transmission, the disclosure proposes a modified RNTI (SI-RNTI-NES) which enables efficient scheduling of OD-SIB1. By using this new RNTI, the network can dynamically allocate resources for OD-SIB1 transmission while maintaining energy efficiency.

According to an embodiment, the disclosure provides a method for indicating to NES UEs which Cell A includes the relevant UL WUS configuration and OD-SIB1 settings for a given NES cell. In practical deployments, multiple anchor cells may exist, and not all of them may store the necessary UL WUS configurations. Without proper signaling, NES UEs may need to blindly search for the correct cell, leading to inefficient network operations. The proposed solution introduces signaling enhancements that allow NES UEs to efficiently locate the correct anchor cell, ensuring minimal signaling overhead and faster acquisition of OD-SIB1.

In one embodiment, solutions are provided to enable an idle or inactive NES UE to identify whether a cell supports on-demand SIB1 transmission. To maintain backward compatibility, traditional UEs that do not support on-demand SIB1 should not camp on cells that operate with on-demand SIB1. At the same time, NES UEs should be capable of identifying whether a cell supports the NES feature and then applying the appropriate behavior. To achieve these objectives, the embodiment proposes several solutions that rely on modifying existing signaling elements by repurposing some of the existing bits in the MIB, using reserved values in certain fields of the MIB, leveraging the specific locations of synchronization signal blocks, or incorporating additional bits in the MIB to indicate on-demand SIB1 support. Different approaches have been developed, each of which is applicable to the various deployment scenarios described in the background.

One such solution involves setting the ssbSubcarrierOffset field to a reserved value, specifically 31 for FR1 or 15 for FR2, to indicate that there is no automatically transmitted SIB1 in the cell. Traditional UEs, when encountering ssbSubcarrierOffset set to 31 or 15, will interpret this as meaning the cell does not support SIB1 and therefore will not attempt to camp on it. However, NES UEs, upon receiving this same value, will understand that while automatic SIB1 is not present, the cell may support on-demand SIB1. To further confirm this, an additional field, ODSIB1Enabled, is introduced. The ODSIB1Enabled field is set within the reserved bits of the MIB or is provided via UL WUS configuration or on-demand SIB1 configuration from an anchor cell, where a list of NES cell IDs is maintained. If ODSIB1Enabled is set to one, the NES UE is allowed to request on-demand SIB1. If ODSIB1Enabled is set to zero, the NES UE does not initiate such a request. Since traditional UEs do not attempt to decode SIB1 when ssbSubcarrierOffset is set to 15 or 31, any reserved values in controlResourceSetZero and searchSpaceZero do not affect their operation.

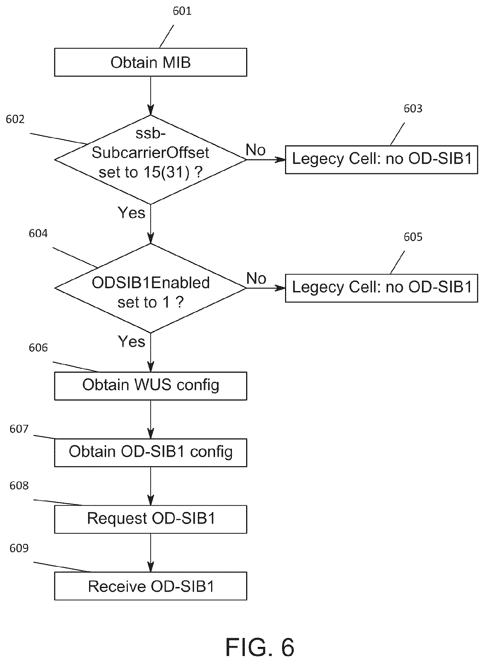

FIG. 6 is a flowchart illustrating a method of a UE identifying, requesting, and receiving OD-SIB1, according to an embodiment.

Referring to FIG. 6, the procedure begins in step 601 when an NES UE synchronizes with the network and decodes the PBCH to obtain the MIB. In step 602, the NES UE then examines the ssbSubcarrierOffset field to determine whether its value is set to 31 in FR1 or 15 in FR2. If the value does not match these reserved numbers, in step 603, the NES UE expects an automatically transmitted SIB1. If the value is set to 15 or 31, the NES UE assumes that automatic SIB1 transmission is not present and proceeds to check the ODSIB1Enabled flag. In step 604, the NES UE then verifies whether ODSIB1Enabled is set to zero or one. If the flag is set to zero, the NES UE determines that the cell does not support on-demand SIB1 in step 605, and does not proceed further. If the flag is set to one, the NES UE determines that on-demand SIB1 may be requested and proceeds to obtain UL WUS configuration in step 606.

If the NES UE has not yet received the UL WUS configuration and OD-SIB1 configuration, it should determine which Cell A provides these configurations for the detected NES cell. Since multiple Cell A instances may exist, the NES UE should efficiently locate the correct one. To avoid blindly searching for Cell A, the NES UE may use pre-configured pairs of controlResourceSetZero and searchSpaceZero stored in pdcch-ConfigSIB1. Each pair may correspond to a different global synchronization channel number (GSCN) offset that indicates the location of the SSB and PBCH for Cell A. The NES UE may determine the nearest (in the corresponding frequency direction) GSCN of the cell defining SS/PBCH block transmitted by a cell (or multiple cells) that include the UL WUS configuration for the detected NES cell as

$$N_{\mathrm{GSCN}}^{\mathrm{Reference}} + N_{\mathrm{GSCN}}^{\mathrm{Size}} \cdot N_{\mathrm{GSCN}}^{\mathrm{Offset}}$$ or another value as a function of $N_{\mathrm{GSCN}}^{\mathrm{Offset}}$. Here, $N_{\mathrm{GSCN}}^{\mathrm{Offset}}$ is the GSCN of the first SS/PBCH block, $N_{\mathrm{GSCN}}^{\mathrm{Size}} = 1$ in FR1 and FR2-1, $N_{\mathrm{GSCN}}^{\mathrm{Size}} = 3$ in FR2-2, and $N_{\mathrm{GSCN}}^{\mathrm{Offset}}$ is a GSCN offset value selected based on the values of the pairs of controlResourceSetZero and searchSpaceZero in pdcch-ConfigSIB1. The NES UE may determine the nearest frequency location of Cell A that transmits the SSB and PBCH and use it to obtain UL WUS configuration for the detected NES cell.

The NES UE then retrieves the OD-SIB1 configuration in step 607, including controlResourceSetZero and searchSpaceZero assignments. Once the NES UE has obtained the necessary configurations, it transmits an UL WUS to request OD-SIB1 in step 608. Upon successful request processing, the NES UE receives the OD-SIB1 transmission from the NES cell in step 609. This method ensures that NES UEs can efficiently determine whether a cell supports OD-SIB1, locate the appropriate configuration source, and request OD-SIB1 without interfering with traditional UE configurations or frequency ranges, thereby improving network efficiency and energy savings.

The UL WUS configuration and OD-SIB1 configuration may be indicated by the anchor cell through an RRC message, such as a newly defined SIB message that includes a list of OD-SIB1 NES cell IDs. Alternatively, an existing paging message from the anchor cell may be used to convey UL WUS configuration and on-demand SIB1 settings. Since idle or inactive UEs already receive paging messages, embedding WUS configuration in paging allows for power savings on both the anchor cell and the on-demand SIB1 NES cell by only sending the WUS configuration when needed.

In another scenario, the MIB or PBCH of the non-anchor cell itself may indicate the UL WUS configuration and OD-SIB1 configuration rather than relying on an anchor cell. This ensures that NES UEs can determine on-demand SIB1 support independently in non-anchor deployments.

In this case, once a Rel-19 UE identifies an NES cell that supports on-demand SIB1, the UL WUS configuration can be indicated to the UE using repurposed bits in searchSpaceZero and controlResourceSetZero. Other available bits in the MIB or the PBCH can also be utilized to signal the UL WUS configuration. For example, one possibility involves using the subCarrierSpacingCommon bit, which, if selected, would ensure that only a single subcarrier spacing value corresponding to the SSB is allowed for Rel-19 NES UEs.

Another possible approach involves using the dmrs-TypeA-Position bit, where one of the two possible positions, either pos2 or pos3, can be defined as a default value for an NES cell. Additionally, the LSB of ssb-SubcarrierOffset, which includes four bits, can also be repurposed. If the range of the offset values is reduced to eight possible values using three bits, the remaining bit could be used to indicate the UL WUS configuration.

For instance, in the traditional specification, both controlResourceSetZero and searchSpaceZero are four-bit fields. To indicate the UL WUS configuration, one or more bits from either of these fields can be repurposed. The possible UL WUS configurations can be mapped to various bit combinations and preconfigured for Rel-19 UEs. For example, two approaches can be used to signal both the UL WUS configuration and the on-demand SIB 1 configuration. The first approach may involve using one or more bits from controlResourceSetZero and searchSpaceZero to indicate the UL WUS configuration, while the remaining bits are used to indicate the on-demand SIB1 configuration. The second approach may assume that each UL WUS configuration is pre-mapped or linked to a specific on-demand SIB1 configuration. In this case, using one or more bits from controlResourceSetZero and searchSpaceZero to indicate the UL WUS configuration would automatically determine the corresponding on-demand SIB1 configuration.

Each UL WUS configuration may include various parameters, such as an indication of the WUS type, including contention-based random access (CBRA) or contention-free random access (CFRA) based WUS, as well as whether WUS is based on message 1 or message 3 of CBRA. The configuration may also indicate the WUS triggering conditions or events, the specific frequency, time, and preamble resource pool allocated for WUS signals, and the uplink transmission timing. In the time domain, the UL WUS signal for OD-SIB 1 may have a predefined offset relative to the most recent SSB reception, ensuring it is transmitted a minimum number of WUS slots after the latest SSB reception. In the frequency domain, the WUS signal for on-demand SIB1 may be transmitted at a predefined offset relative to the SS/PBCH position. For example, the UL WUS configuration could be mapped according to Table 4, below.

Table 4

| WUS config index | WUS type | WUS trigger conditions | Frequency / time / preamble resources | UL Tx Timing | UL Tx time offset |
|---|---|---|---|---|---|
| 00 | A | ... | | | |
| 10 | B | ... | | | |
| 01 | C | ... | | | |
| 11 | D | ... | | | |

In addition to the general UL WUS parameters, the configuration may also specify the PRACH settings related to UL WUS. The PRACH configuration may include details on which non-anchor cell will receive the PRACH transmission. For example, a mapping can be established between one or multiple PRACH resources and one or more non-anchor cell IDs, ensuring that the PRACH is transmitted on the appropriate non-anchor cell. Similarly, the PRACH configuration may define which non-anchor cells should be triggered for OD-SIB 1 transmission, allowing a mapping between PRACH resources and the corresponding non-anchor cell IDs. Furthermore, the configuration may define the PRACH parameters for UL WUS, including search space settings that indicate where the UE can receive random access responses (RARs) or message 4 transmissions from a non-anchor cell, particularly in cases where UL WUS is based on message 1 or message 3. This configuration information is shown below in Table 5.

Table 5

| Purpose | Parameters | | |
|---|---|---|---|
| To which cell does the config applies | **NES-CellId** | PhysCellId | |
| | | ARFCN-ValueNR | |
| WUS transmission | **SIB1-RequestConfig** | ss-PBCH-BlockPower | |
| | | rach-OccasionsSIB1 | Prach-ConfigurationIndex |
| | | | msg1-FDM |
| | | | msg1-FrequencyStart |
| | | | zeroCorrelationZoneConfig |
| | | | preambleReceivedTargetPower |
| | | | preambleTransMax |
| | | | powerRampingStep |
| | | | ra-ResponseWindow |
| | | | ssb-perRACH-Occasion |
| | | sib1-RequestPeriod | |
| | | sib1-RequestResource | ra-PreambleStartIndex |
| | | | ra-AssociationPeriodIndex |
| | | | ra-ssb-OccasionMaskIndex |
| | | rsrp-ThresholdSSB | |
| | | prach-RootSequenceIndex | |
| | | msg1-SubcarrierSpacing | |
| | | restrictedSetConfig | |
| | | tdd-UL-DL-ConfigurationCommon | |
| | **frequencyInfoUL** | frequencyBandList | |
| | | absoluteFrequencyPointA | |
| | | offsetToCarrier | |
| | | p-Max | |
| | | frequencyShift7p5khz | |
| SIB1 reception | **pdcch-ConfigSIB1** | ssb-SubcarrierOffset | |
| | | controlResourceSetZero | |
| | | searchSpaceZero | |
| RAR Reception | **pdcch-ConfigOD-SIB1-RAR** | controlResourceSet | |
| | | monitoringSlotPeriodicityAndOffset | |
| | | Duration | |
| | | monitoringSymbolsWithinSlot | |
| | | aggregationLevels | |
| | | • Additional information if the NES cell is identified via an existing IE in MIB. | |

The UL WUS configuration may also be signaled to Rel-19 idle or inactive UEs through an extended RRC message from an anchor cell. This could involve adding new fields or information elements (IEs) to SIB1 or system information blocks 3 or 4 (SIB3/SIB4). Alternatively, a new SIB could be introduced specifically for NES-related information. Paging messages or an RRC connection release message from the anchor cell could also be used to convey UL WUS and OD-SIB1 configuration information.

Upon receiving PRACH allocated for triggering OD-SIB1, the gNB (cell) may transmit a RAR as confirmation. Additionally, the gNB may schedule a physical uplink shared channel (PUSCH) transmission to request further information from the UE, such as the non-anchor cell index, in cases where a PRACH resource is associated with multiple non-anchor cells.

The method for determining where to send the WUS may be based on predefined rules. For example, the WUS may be transmitted a certain number of slots after the SSB reception, in specific predetermined frequency resources that are determined based on the frequency location of the SSB.

For the transmission configuration of OD-SIB1, including its associated controlResourceSetZero and search-SpaceZero, the necessary parameters can be indicated using repurposed bits within the tables of searchSpaceZero and controlResourceSetZero as defined in the MIB of the 3GPP specification 38.213. This approach may allow for the reuse of reserved bits within these fields to efficiently indicate the configuration required for OD-SIB1 transmission. In addition to using bits for the UL WUS configuration, the remaining bits in controlResourceSetZero and searchSpaceZero can be allocated to define CORESET#0 and Search Space #0 for OD-SIB1. The transmission of OD-SIB1 can be configured as either a semi-persistent OD-SIB1 transmission or an aperiodic OD-SIB1 transmission within a specific time window.

Additional bits in the MIB or the PBCH can also be used to indicate OD-SIB1 configuration. One possible approach is the use of the subCarrierSpacingCommon bit, which, if allocated, would allow a single subcarrier spacing value that corresponds to the synchronization signal block for Rel-19 NES UEs. Another option is the use of the dmrs-TypeA-Position bit, which, if employed, would allow either position two or position three to be defined as a default value for OD-SIB 1 in an NES cell. Furthermore, the LSB of ssb-SubcarrierOffset, which includes four bits, can be used. Depending on the synchronization and channel raster design in Radio Access Network Working Group 4 (RAN4), it may be possible to reduce the range of the offset field to eight values by using only three bits for Rel-19 UEs. This would free up one bit within ssb-SubcarrierOffset, which could then be repurposed to indicate OD-SIB 1 configuration for Rel-19 UEs.

One example of CORESET#0 for OD-SIB 1 is shown below in Table 6.

Table 6

| Index | SS/PBCH block and multiplexing pattern | Number of RBs $N_{RB}^{CORESET}$ | Number of Symbols $N_{symb}^{CORESET}$ | Offset (RBs) |
|---|---|---|---|---|
| 0 | 1 | 24 | 2 | 0 |
| 1 | 1 | 24 | 2 | 2 |
| 2 | 1 | 24 | 2 | 4 |
| 3 | 1 | 24 | 3 | 0 |
| 4 | 1 | 24 | 3 | 2 |
| 5 | 1 | 24 | 3 | 4 |
| 6 | 1 | 48 | 1 | 12 |
| 7 | Reserved | | | |

One example of searchSpaceZero for OD-SIB 1 is shown below in Table 7.

Table 7

| Index | O | Number of search space sets per slot | M | First symbol index | O_start (offset to WUS Tx time) | O_end (offset to WUS Tx time) |
|---|---|---|---|---|---|---|
| 0 | 0 | 1 | 1 | 0 | X1 slots/frames | X2 slots/frames |
| 1 | 0 | 2 | 1/2 | {0, if i is even}, { $N_{symb}^{CORESET}$ , if i is odd} | Z1 slots/frames | Z2 slots/frames |
| 2 | 2 | 1 | 1 | 0 | Y1 slots/frames | Y2 slots/frames |

(continued)

| Index | $O$ | Number of search space sets per slot | M | First symbol index | O_start (offset to WUS Tx time) | O_end (offset to WUS Tx time) |
|---|---|---|---|---|---|---|
| 3 | 2 | 2 | 1/2 | {0, if $i$ is even}, { $N_{\text{symb}}^{CORESET}$, if $i$ is odd} | .... | ...... |
| 4 | 5 | 1 | 1 | 0 | | |
| 5 | 5 | 2 | 1/2 | {0, if $i$ is even}, { $N_{\text{symb}}^{CORESET}$, if $i$ is odd} | | |
| 6 | 7 | 1 | 1 | 0 | | |
| 7 | 7 | 2 | 1/2 | {0, if $i$ is even}, { $N_{\text{symb}}^{CORESET}$, if $i$ is odd} | | |

According to an embodiment, a modification to the specification includes the introduction of additional parameters, O_start and O_end, to define a time window for the provision of OD-SIB 1 relative to the UL WUS transmission timing by the UE. These parameters may be utilized to configure aperiodic OD-SIB 1 transmission, wherein O_start designates the start of the OD-SIB1 availability window and O_end designates the end of the availability window. In some embodiments, for semi-persistent OD-SIB 1 transmission, only O_start may be required, as the periodic nature of the transmission obviates the need for a defined end point. Other parameters related to search space zero may remain consistent with those in the known specification.

For certain embodiments, the OD-SIB1 configuration may be included as part of the UL WUS configuration and may be transmitted to Rel-19 idle or inactive UEs via an extended RRC message from an anchor cell. In some embodiments, the anchor cell may communicate this information by introducing new fields or IEs in SIB1, SIB3, or SIB4 messages. Alternatively, the OD-SIB1 configuration may be conveyed through paging messages or an RRC connection release message from the anchor cell, enabling the efficient delivery of OD-SIB1 configuration parameters to idle and inactive UEs.

In another embodiment, the UE may be configured to expect SIB1 reception during a predefined SIB1 monitoring occasion, wherein the reception occurs T milliseconds (or slots) after the UE's transmission of the UL WUS signal (message 1) or reception of a downlink random access response (DL RAR) message (message 2). The predefined monitoring occasion may ensure efficient reception of OD-SIB1 while minimizing unnecessary wake-ups and optimizing network resource utilization.

In another embodiment, the reception configuration of OD-SIB1, including its associated CORESET#0 and searchSpaceZero, may be indicated in message 2 or message 4 of the four-step RACH procedure for OD-SIB 1 requesting. The specific message in which this configuration is provided may depend on whether the UL WUS is transmitted via message 1 or message 3. In some embodiments, for contention-free-based RACH for UL WUS, message 2 may include the reception configuration of OD-SIB 1, specifying CORESET#0, searchSpaceZero, and other parameters as described above. This signaling may ensure that the UE receives the necessary OD-SIB 1 configuration as part of the RACH procedure, enabling efficient access to the requested system information.

Upon determining the appropriate reception configuration, the UE may proceed to request its OD-SIB1 from the NES cell. Once the OD-SIB1 request is successfully processed, the UE may receive its OD-SIB 1 transmission from the NES cell.

In another embodiment, if the NES UE first detects a cell that is designated as Cell A, the NES UE may obtain the UL WUS configuration and OD-SIB 1 configuration from Cell A. These configurations may include information that assigns or associates each NES cell or each group of NES cells, identified by their physical cell identifications (IDs), with a specific PRACH resource for UL WUS transmission. The PRACH resource may be allocated as a dedicated preamble or a dedicated random access opportunity (RO) assigned to a specific NES cell or group of NES cells. By including an indication of which UL WUS signal should be used to wake up a specific NES cell or a group of NES cells, the system may avoid waking up all NES cells in the vicinity, thereby reducing unnecessary network power consumption.

After obtaining the UL WUS and OD-SIB 1 configuration from Cell A, the NES UE may initiate the process of detecting a suitable NES cell to camp on, in addition to Cell A. If the NES UE identifies an NES cell that meets a cell selection or reselection criteria, based on the SSB signal strength measurements such as reference signal received power (RSRP), reference signal received quality (RSRQ), or received signal strength indicator (RSSI), the NES UE proceeds with UL WUS transmission. The NES UE may transmit the UL WUS using the specific PRACH resource designated for that NES cell. This ensures that the NES UE receives a random access response (RAR) only from the intended NES cell, rather than from multiple NES cells in the surrounding area, thereby optimizing network efficiency.

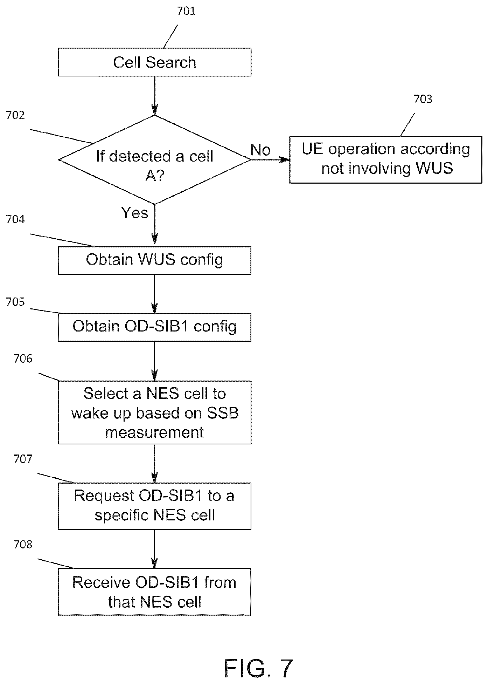

FIG. 7 is a flowchart illustrating an NES UE operation when it first detects an anchor cell, according to an embodiment.

Referring to FIG. 7, step 701 represents the cell search operation performed by the NES UE. If a Cell A is detected, the process moves to step 702, where the NES UE determines whether the detected cell is indeed Cell A. If the answer is no, the UE follows an alternative operational path in step 703, not involving obtaining the WUS configuration. If the answer is Yes, the process proceeds to step 704, where the NES UE obtains the UL WUS configuration from Cell A. Following this, in step 705, the NES UE retrieves the OD-SIB 1 configuration from Cell A.

In step 705, the NES UE selects a suitable NES cell for wake-up based on the SSB measurement results, ensuring that the chosen NES cell satisfies the required signal strength criteria. Once a suitable NES cell is identified, the NES UE proceeds to step 707, where it transmits a UL WUS request directed to the specific NES cell using the assigned PRACH resource. Then, in step 708, the NES UE receives the on-demand SIB1 transmission from the selected NES cell, completing the process.

In one embodiment, the ssbSubcarrierOffset field may be set to a reserved value that is not recognized by traditional UEs. Specifically, the ssbSubcarrierOffset in the MIB of a cell supporting OD-SIB1 may be set to 30 in FR1 and 14 in FR2, both of which are reserved values under the current specification. When a traditional UE decodes ssbSubcarrierOffset = 30 (FR1) or 14 (FR2), there may be no defined UE behavior for these values in the specification, preventing the UE from decoding SIB1 and camping on the cell. This ensures that traditional UEs do not mistakenly attempt to access OD-SIB1 cells. At the same time, the use of these reserved values may serve as an early indication for NES UEs that the cell supports OD-SIB1. Additionally, an NES cell may be further indicated by using a spare bit in the MIB or by repurposing one of the reserved values in controlResourceSetZero and/or searchSpaceZero. If this indication is not provided via the MIB, it may be included in the UL WUS configuration or OD-SIB1 configuration provided by an anchor cell, listing the cell IDs of all NES cells.

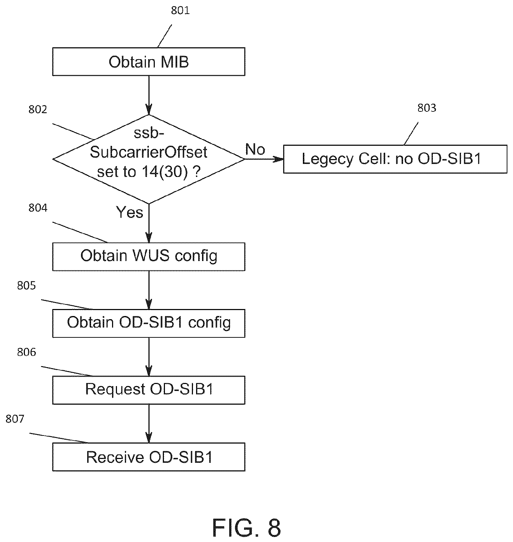

FIG. 8 is a flowchart illustrating an NES UE operation for determining if OD-SIB1 is enabled, according to an embodiment.

Referring to FIG. 8, in step 801, the NES UE performs MIB acquisition, synchronizing with the network, decoding the PBCH, and extracting the MIB. During this process, the NES UE may retrieve the ssbSubcarrierOffset field. In step 802, the NES UE evaluates whether ssbSubcarrierOffset is set to 14 (FR2) or 30 (FR1). If the offset is not set to these values, in step 803, the NES UE determines that the cell is a traditional cell with no OD-SIB1 support, and traditional SIB1 reception procedures are followed. If the ssbSubcarrierOffset is set to 14 (FR2) or 30 (FR1), the NES UE recognizes the cell as an NES cell, allowing it to apply the appropriate procedures for requesting and receiving OD-SIB1. In this case, in step 804, the NES UE proceeds to obtain the UL WUS configuration.

Steps 804-807 of FIG. 8 may correspond to steps 606-609 of FIG. 6, respectively, and their descriptions may be substantially similar for purposes of clarity and consistency. However, it should be understood that variations may exist, and the embodiments described herein are not limited to any particular mapping between the steps of different figures.

In one embodiment, the ssbSubcarrierOffset field may be set to a value within the range $30 > K_{SSB} \geq 24$ in FR1 and $14 > K_{SSB} \geq 12$ in FR2 to distinguish between NES cells supporting OD-SIB1 and cells that lack CD-SSB. This ensures that traditional UEs, which can only differentiate between periodic SIB 1 transmission and no-SIB 1 operation, do not attempt to camp on NES cells. When all SSBs in an NES cell are non-core-dedicated (NCD)-SSBs, UEs may avoid selecting these cells and will continue searching for the nearest CD-SSB in accordance with traditional procedures. The pdcch-ConfigSIB1 field in the MIB of the NES cell can provide assistant information to guide this selection process.

A Rel-19 UE that detects a cell with only NCD-SSBs should also determine whether the cell supports OD-SIB1 or is a traditional SIB1-less cell. This determination may be made using the UL-WUS configuration provided by a Cell A, which the Rel-19 UE detects after identifying an NES cell. If the detected NES cell's carrier frequency and physical cell ID (PCI) are included in the UL-WUS configuration or OD-SIB1 configuration provided by Cell A, the UE may recognize it as an NES cell supporting OD-SIB 1. Otherwise, the NES cell may be treated as an SIB1-less cell. The OD-SIB1 indication may be confirmed through a spare bit in the MIB or via one of the reserved values in controlResourceSetZero and/or searchSpaceZero.

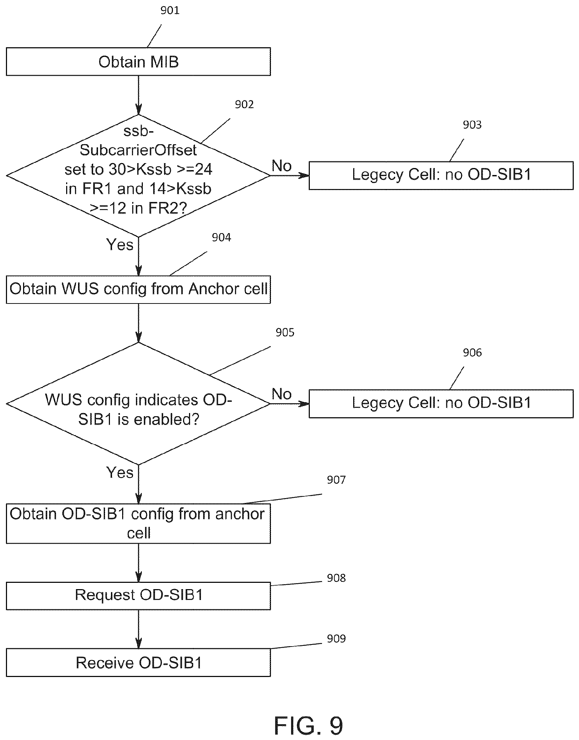

FIG. 9 is a flowchart illustrating an NES UE operation for determining if OD-SIB1 is enabled, according to an embodiment.

Referring to FIG. 9, in step 901, the NES UE performs MIB acquisition, synchronizing with the network, decoding the PBCH, and extracting the MIB, including the ssbSubcarrierOffset value. In step 902, the NES UE evaluates whether ssbSubcarrierOffset falls within the range $30 > K_{SSB} \geq 24$ in FR1 or $14 > K_{SSB} \geq 12$ in FR2. If the value does not fall within these ranges, the UE determines that the cell is a cell with no OD-SIB1 support in step 903, and the UE applies traditional SIB1 reception procedures. If the value falls within the specified range, the NES UE recognizes the cell as a potential NES cell with OD-SIB1 or an SIB1-less cell and proceeds to obtain further information from an anchor cell.

In step 904, the NES UE obtains the UL WUS configuration from the anchor cell. If the NES UE has not yet acquired the WUS and OD-SIB1 configurations, it should determine from which Cell A to obtain these parameters. Since multiple cells may serve as Cell A, blindly decoding all potential instances would lead to unnecessary power consumption and latency. To address this, the ssbSubcarrierOffset for NES UEs may be set to a value corresponding to the GSCN offset range where Cell A's SSB is located. The NES UE may determine the nearest GSCN associated with a cell defining an SS/PBCH block that transmits the UL WUS configuration for the NES cell.

The GSCN may be determined using $N_{\mathrm{GSCN}}^{\mathrm{Reference}} + N_{\mathrm{GSCN}}^{\mathrm{Size}} \cdot N_{\mathrm{GSCN}}^{\mathrm{Offset}}$, where $N_{\mathrm{GSCN}}^{\mathrm{Reference}}$ is the first SS/PBCH block GSCN, $N_{\mathrm{GSCN}}^{\mathrm{Size}}$ is 1 in FR1 and FR2-1, and 3 in FR2-2, while $N_{\mathrm{GSCN}}^{\mathrm{Offset}}$ is a GSCN offset derived from Tables 13-16 (FR1) and 13-17 (FR2) in 3GPP TS 38.213, or from a new table defined for NES UEs.

In this new table, each ssbSubcarrierOffset value may map to a pair of (controlResourceSetZero, searchSpaceZero) in pdcch-ConfigSIB 1, where each pair corresponds to a different $N_{\mathrm{GSCN}}^{\mathrm{Offset}}$ than those in the traditional tables. If the NES UE detects a second SS/PBCH block that does not provide a UL WUS configuration corresponding to the detected NES cell, the UE may disregard the GSCN information related to the SS/PBCH block when performing a cell search.

In step 905, once the NES UE obtains the WUS configuration from the corresponding Cell A, it determines whether the NES cell supports OD-SIB1 by checking if its carrier frequency and PCI are listed in the UL-WUS configuration or OD-SIB1 configuration provided by Cell A. If the information is not present, the NES UE determines that the cell is a SIB1-less legacy cell and follows traditional procedures in step 906. Otherwise, the NES UE proceeds with OD-SIB 1 procedures in step 907 by obtaining the OD-SIB 1 configuration from the anchor cell.

In step 908, the NES UE transmits a request for OD-SIB 1 to the NES cell. In step 909, the NES UE receives OD-SIB 1 from the NES cell, completing the process.

Steps 908-909 of FIG. 9 may correspond to steps 608-609 of FIG. 6, respectively, and their descriptions may be substantially similar for purposes of clarity and consistency. However, it should be understood that variations may exist, and the embodiments described herein are not limited to any particular mapping between the steps of different figures.

In one embodiment, a dedicated synchronization raster or an off-sync raster frequency is used for transmitting SSB in a cell supporting OD-SIB1. This ensures that UEs do not detect or attempt to camp on such cells, as they operate only on the standard synchronization raster where SSBs for NES cells are not transmitted. Consequently, these NES cells remain undetectable to traditional UEs. Conversely, Rel-NES UEs will use a dedicated NES raster including the NES configuration information, though they may also need to scan both the legacy and NES rasters to identify both legacy and NES cells.

To further enhance the early identification of an OD-SIB1-supporting NES cell, SSB may be transmitted at a preconfigured or RRC-configured non-sync raster frequency location. Since other SSBs are transmitted at sync raster frequency locations, they UEs will be unable to detect these NES cells. Release-19 NES UEs can detect SSBs at these off-sync raster frequency locations in addition to performing legacy sync raster detection, allowing them to identify candidate NES cells supporting OD-SIB 1 for cell reselection. The feasibility of defining off-sync raster locations for NES cells supporting OD-SIB1 may require confirmation by RAN4.

For instance, the field "dl-CarrierFreq" in SIB4 can be extended to include new values beyond 0 - 3279165, which may define new off-sync raster frequency locations for SSBs of NES cells supporting OD-SIB1. Alternatively, a new field, "dl-CarrierFreq-Off_Raster", can be introduced in SIB4 to specify these new off-sync raster frequency locations for NES cells supporting OD-SIB1. Furthermore, a traditional cell supporting legacy SIB1 may inform Release-19 idle/inactive UEs of the SSB center frequency locations of NES cells using an SIBx message. This can be done via a defined field in SIB1, a repurposed field in SIB1, or a new/reused field in the cell reselection configuration of SIB3 or SIB4. By receiving this information, Rel-19 NES UEs can be aware of off-sync raster frequency locations for SSB detection in candidate NES cells supporting OD-SIB1. Alternatively, NES UEs may be pre-configured with certain off-sync raster frequency locations for SSB detection in OD-SIB1-supporting NES cells.

In terms of UE behavior, two embodiments may exist. In one option, an NES UE prioritizes detecting a traditional cell before detecting an NES cell. In the other, an NES UE detects both traditional and NES cells simultaneously, selecting the first cell that satisfies the cell selection criteria.

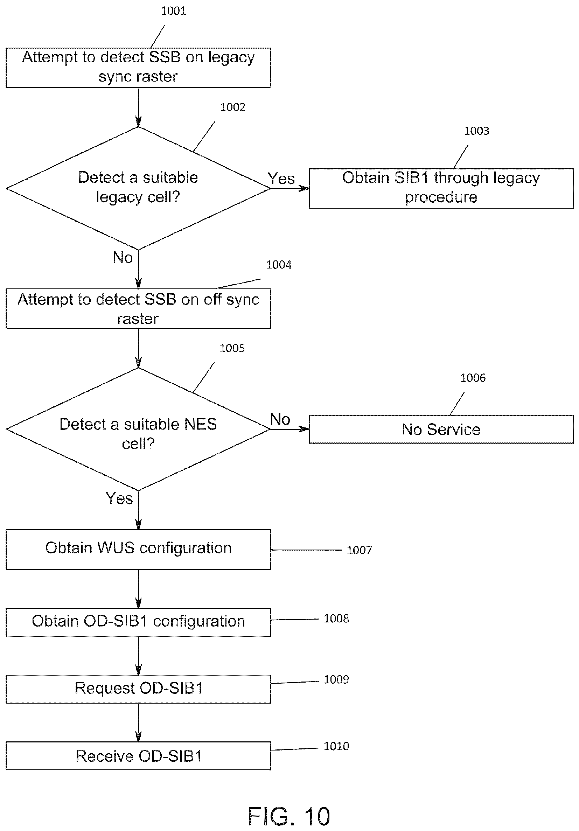

FIG. 10 is a flowchart illustrating an NES UE operation for SSB indication via off-sync raster, according to an embodiment.

Referring to FIG. 10, the process describes an embodiment of a method for determining network entry and selecting NES cells based on SSB detection, ensuring that Rel-19 NES UEs can efficiently identify OD-SIB1-supporting NES cells while preventing traditional UEs from improperly camping on such cells. The method includes a structured sequence of UE operations, where each step is designed to ensure efficient cell detection, reselection, and acquisition of OD-SIB1. Each block of is described in detail below.

Referring again to FIG. 10, in step 1001, the NES UE initiates a search for synchronization signals by attempting to detect SSBs on the legacy synchronization raster. This ensures that the UE first attempts to locate a legacy cell that operates under existing specifications. The NES UE follows standard synchronization procedures, decodes the PBCH, and extracts the MIB, as per legacy procedures.

In step 1002, the NES UE evaluates whether a suitable legacy cell is detected based on legacy cell reselection criteria. If a suitable legacy cell is detected, the process proceeds to step 1003, where the NES UE acquires SIB1 through the legacy procedure. This allows the UE to complete network registration and operate under standard network conditions.

If, in step 1002, the NES UE determines that no suitable legacy cell is detected, the process advances to step 1004, where the NES UE attempts to detect SSBs on an off-sync raster frequency. This step ensures that NES UEs can search for OD-SIB1-supporting NES cells that transmit their SSBs on dedicated or non-standard frequency locations, which are not detectable by legacy UEs.

In step 1005, the NES UE evaluates whether a suitable NES cell is detected based on legacy reselection criteria. If no NES cell is detected, the process proceeds to step 1006, where the NES UE declares "no service" (e.g., radio link failure), as no compatible network resource was identified.

If, in step 1005, the NES UE detects a suitable NES cell, the process advances to step 1007, where the NES UE obtains the WUS configuration.

Steps 1007-1010 of FIG. 10 may correspond to steps 606-609 of FIG. 6, respectively, and their descriptions may be substantially similar for purposes of clarity and consistency. However, it should be understood that variations may exist, and the embodiments described herein are not limited to any particular mapping between the steps of different figures.

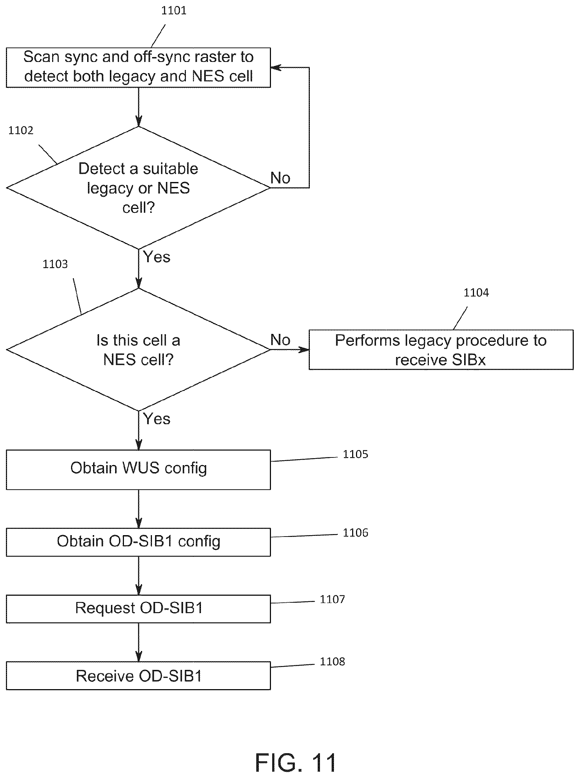

FIG. 11 is a flowchart illustrating an NES UE operation for detecting and selecting a suitable cell, according to an embodiment.

Referring to FIG. 11, in step 1101, the NES UE initiates scanning of both the legacy sync raster and the off-sync raster to detect SSBs transmitted by either legacy or NES cells. The NES UE follows the synchronization procedure by decoding the PBCH and extracting the MIB, which provides information necessary for identifying potential serving cells.

In step 1102, the NES UE determines whether it has detected a suitable legacy or NES cell that meets the cell selection or reselection criteria. If no suitable cell is detected, the process loops back to step 1101, where the NES UE continues scanning both the legacy sync raster and the off-sync raster.

If a suitable cell is detected in step 1102, the process advances to step 1103, where the NES UE determines whether the detected cell is a legacy cell or an NES cell.

If, in step 1103, the detected cell is determined to be a legacy cell, the process proceeds to step 1104, where the NES UE obtains SIB1 from the legacy cell following conventional procedures.

If the detected cell is identified as an NES cell, the process moves to step 1105, where the NES UE obtains the UL WUS configuration.

Steps 1105-1108 of FIG. 11 may correspond to steps 606-609 of FIG. 6, respectively, and their descriptions may be substantially similar for purposes of clarity and consistency. However, it should be understood that variations may exist, and the embodiments described herein are not limited to any particular mapping between the steps of different figures.

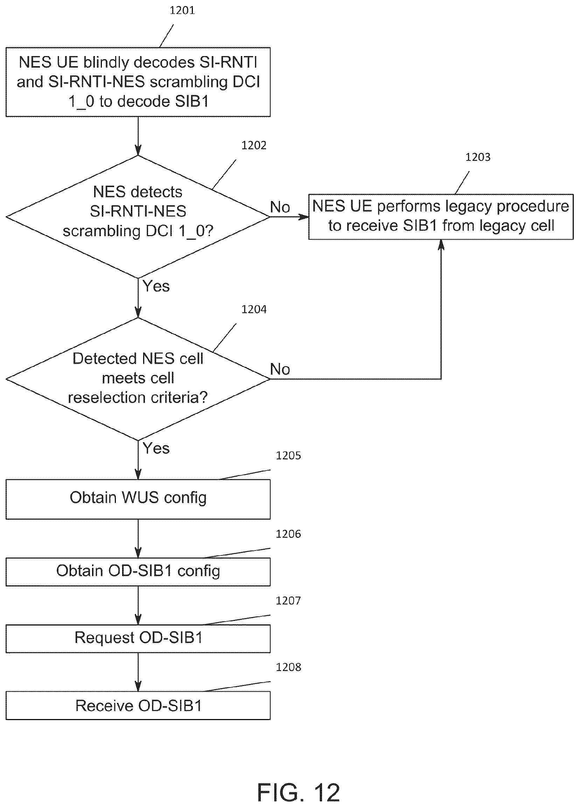

FIG. 12 is a flowchart illustrating an NES UE operation for early identification of an OD-SIB1 NES cell, according to an embodiment.

Referring to FIG. 12, the process may be used to prevent legacy UEs from camping on such a cell by employing a newly introduced system information radio network temporary identifier (SI-RNTI-NES). This SI-RNTI-NES can be used for scrambling the downlink control information (DCI) 1_0, which schedules the SIB1 from an OD-SIB1 NES cell.

Referring again to FIG. 12, at step 1201, the NES UE blindly decodes both SI-RNTI and SI-RNTI-NES while attempting to receive SIB1 from either a legacy cell or an NES cell. The purpose of this step is to ensure that the NES UE can correctly identify whether a detected cell is operating with legacy SIB1 transmission or whether it is an OD-SIB1 NES cell.

At step 1202, the NES UE determines whether SI-RNTI-NES is detected. If the UE does not detect SI-RNTI-NES, the process moves to step 1203, where the NES UE performs the standard legacy procedure to receive SIB1 from a legacy cell. Since legacy UEs are not designed to recognize SI-RNTI-NES, they will be unable to decode SIB1 from the OD-SIB1 NES cell, effectively preventing them from camping on the NES cell.

If, at step 1202, the NES UE detects SI-RNTI-NES, the process moves to step 1204, where the NES UE verifies whether the detected NES cell meets the predefined cell reselection criteria. If the criteria are not met, the UE defaults to legacy SIB1 reception behavior from a legacy cell, similar to step 1203.

If, at step 1204, the detected NES cell meets the reselection criteria, the NES UE proceeds with obtaining the WUS configuration at step 1205.

Steps 1205-1208 of FIG. 12 may correspond to steps 606-609 of FIG. 6, respectively, and their descriptions may be substantially similar for purposes of clarity and consistency. However, it should be understood that variations may exist, and the embodiments described herein are not limited to any particular mapping between the steps of different figures.

In addition to the described process, SI-RNTI-NES scrambling may be utilized for DCI in various deployment scenarios. When the NES UE has requested OD-SIB1, it may monitor the PDCCH and attempt to decode the DCI scrambled with SI-RNTI-NES to retrieve SIB1. This ensures that the NES UE can successfully receive OD-SIB1 while preventing legacy UEs from accessing the NES cell.

In another embodiment, for the indication of an OD-SIB 1 NES cell and to prevent legacy UEs from accessing an OD-SIB1 cell, an anchor cell may be utilized to provide this information. The anchor cell may include the cell IDs of the OD-SIB1 NES cell in an RRC message. This may be achieved by extending existing RRC messages from the anchor cell, such as adding new fields or IEs in SIB1, SIB3, SIB4, or SIBx messages. Additionally, paging messages or an RRC release message from the anchor cell may also be used to convey this information to NES UEs.

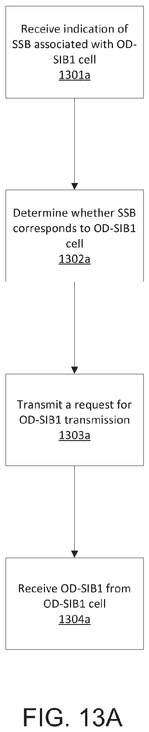

FIG. 13A is a flowchart illustrating an NES UE operation for early indication and configuration of OD-SIB 1, according to an embodiment. The steps illustrated in FIG. 13A may be executed by a processor of an electronic device (e.g., a UE) as stored instructions in memory.

Referring to FIG. 13A, in step 1301a, the UE receives, from a network node, an indication that an SSB is associated with an OD-SIB1 cell. This indication may be provided in an MIB or as a reserved value in a search space configuration. For example, the MIB may include a $K_{SSB}$ value exceeding a threshold, such as $K_{SSB} > 23$ in FR1 or $K_{SSB} > 11$ in FR2, indicating OD-SIB1 operation.

In step 1302a, the UE determines whether the SSB corresponds to an OD-SIB1 cell based on a WUS configuration received from an anchor cell. The WUS configuration may include mappings of PRACH resources to OD-SIB 1 cell identifiers, such as physical cell IDs or frequencies.

In step 1303a, the UE transmits a request for OD-SIB1 transmission, which may be sent via PRACH using a preamble associated with the NES cell. The PRACH configuration may be preconfigured or derived from the WUS configuration.

In step 1304a, the UE receives an OD-SIB1. The OD-SIB1 may be scheduled by the network and indicated using a DCI message scrambled with an SI-RNTI or SI-RNTI-NES. The OD-SIB1 may be transmitted by the OD-SIB1 cell over a predefined CORESET and search space, and the timing of the transmission may occur within a predefined offset following the WUS transmission or as indicated by the DCI. In this regard, the expression "receiving an OD-SIB1 from the OD-SIB1 cell" may mean that the OD-SIB1 is received by the UE and is transmitted from a network node. The "OD-SIB1 cell" may include information that is necessary to access the OD-SIB1.

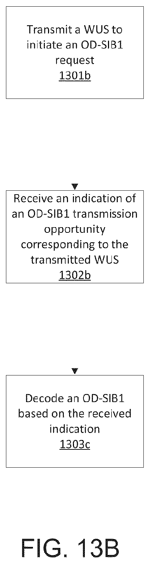

FIG. 13B is a flowchart illustrating an NES UE operation for early indication and configuration of OD-SIB 1, according to an embodiment. The steps illustrated in FIG. 13A may be executed by a processor of an electronic device (e.g., a UE) as stored instructions in memory.

Referring to FIG. 13B, in step 1301b, the UE transmits a WUS to the network to initiate a request for OD-SIB1. The WUS may be transmitted according to a configuration received from an anchor cell and may include mapping to a preconfigured PRACH resource associated with the target OD-SIB 1 cell.

In step 1302b, the UE receives an indication from the network identifying an upcoming transmission opportunity for the requested OD-SIB1. The indication may be provided via DCI scrambled with an SI-RNTI-NES. The transmission opportunity may specify timing, frequency domain resources, or other scheduling parameters associated with the OD-SIB1, and may reflect a preconfigured or dynamically allocated slot in which the OD-SIB1 is expected to be transmitted.

In step 1303b, the UE decodes an OD-SIB1 (e.g., a received OD-SIB1 transmission) based on the received indication. For example, the UE can use CORESET and search space configuration parameters provided in the WUS configuration or OD-SIB1 configuration in step 1303b.

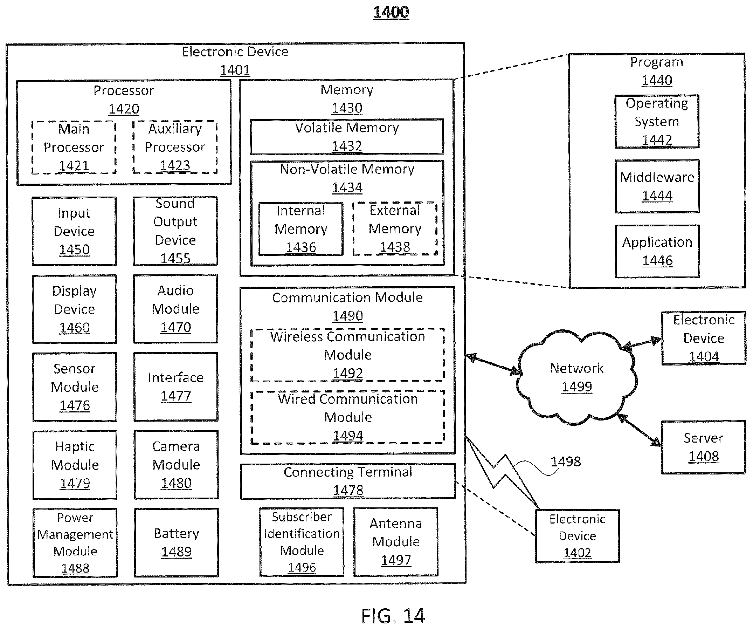

FIG. 14 is a block diagram of an electronic device in a network environment, according to an embodiment.

Referring to FIG. 14, an electronic device 1401 (e.g., a UE) in a network environment 1400 may communicate with an electronic device 1402 via a first network 1498 (e.g., a short-range wireless communication network), or an electronic device 1404 or a server 1408 via a second network 1499 (e.g., a long-range wireless communication network). The electronic device 1401 may communicate with the electronic device 1404 via the server 1408. The electronic device 1401 may include a processor 1420, a memory 1430, an input device 1450, a sound output device 1455, a display device 1460, an audio module 1470, a sensor module 1476, an interface 1477, a haptic module 1479, a camera module 1480, a power management module 1488, a battery 1489, a communication module 1490, a subscriber identification module (SIM) card 1496, or an antenna module 1497. In one embodiment, at least one (e.g., the display device 1460 or the camera module 1480) of the components may be omitted from the electronic device 1401, or one or more other components may be added to the electronic device 1401. Some of the components may be implemented as a single integrated circuit (IC). For example, the sensor module 1476 (e.g., a fingerprint sensor, an iris sensor, or an illuminance sensor) may be embedded in the display device 1460 (e.g., a display).

The processor 1420 may execute software (e.g., a program 1440) to control at least one other component (e.g., a hardware or a software component) of the electronic device 1401 coupled with the processor 1420 and may perform various data processing or computations. For example, execution of instructions by the processor 1420 may cause the hardware components to perform operations such as transmitting, receiving, decoding, encoding, and/or making determinations based on received signals or configurations.

Various embodiments disclosed herein provide a structured approach to optimizing network efficiency and improving UE performance in identifying and accessing NES cells supporting OD-SIB1. By using components such as the processor 1420, memory 1430, and communication module 1490, the electronic device 1401 can implement the described methods for detecting and processing OD-SIB1 transmissions. The processor 1420, in conjunction with the memory 1430 storing instructions for scanning SSBs across both legacy and off-sync raster frequencies, enables the electronic device to efficiently distinguish between legacy and NES cells. The communication module 1490, in cooperation with the antenna module 1497, facilitates the reception of SIB1.

Furthermore, the integration of the power management module 1488 allows the electronic device 1401 to optimize power consumption during the detection and reselection process. By employing the described methods, the device can avoid unnecessary wake-ups of NES cells and reduce network signaling overhead, thereby enhancing energy efficiency for both the UE and the network. Additionally, the memory 1430 may store pre-configured mappings between UL WUS configurations and NES cell IDs, allowing for rapid association and reduced latency in OD-SIB1 requests.

As at least part of the data processing or computations, the processor 1420 may load a command or data received from another component (e.g., the sensor module 1476 or the communication module 1490) in volatile memory 1432, process the command or the data stored in the volatile memory 1432, and store resulting data in non-volatile memory 1434. The processor 1420 may include a main processor 1421 (e.g., a central processing unit (CPU) or an application processor (AP)), and an auxiliary processor 1423 (e.g., a graphics processing unit (GPU), an image signal processor (ISP), a sensor hub processor, or a communication processor (CP)) that is operable independently from, or in conjunction with, the main processor 1421. Additionally or alternatively, the auxiliary processor 1423 may be adapted to consume less power than the main processor 1421, or execute a particular function. The auxiliary processor 1423 may be implemented as being separate from, or a part of, the main processor 1421.

The auxiliary processor 1423 may control at least some of the functions or states related to at least one component (e.g., the display device 1460, the sensor module 1476, or the communication module 1490) among the components of the electronic device 1401, instead of the main processor 1421 while the main processor 1421 is in an inactive (e.g., sleep) state, or together with the main processor 1421 while the main processor 1421 is in an active state (e.g., executing an application). The auxiliary processor 1423 (e.g., an image signal processor or a communication processor) may be implemented as part of another component (e.g., the camera module 1480 or the communication module 1490) functionally related to the auxiliary processor 1423.

The memory 1430 may store various data used by at least one component (e.g., the processor 1420 or the sensor module 1476) of the electronic device 1401. The various data may include, for example, software (e.g., the program 1440) and input data or output data for a command related thereto. The memory 1430 may include the volatile memory 1432 or the non-volatile memory 1434. Non-volatile memory 1434 may include internal memory 1436 and/or external memory 1438.

The program 1440 may be stored in the memory 1430 as software, and may include, for example, an operating system (OS) 1442, middleware 1444, or an application 1446.

The input device 1450 may receive a command or data to be used by another component (e.g., the processor 1420) of the electronic device 1401, from the outside (e.g., a user) of the electronic device 1401. The input device 1450 may include, for example, a microphone, a mouse, or a keyboard.

The sound output device 1455 may output sound signals to the outside of the electronic device 1401. The sound output device 1455 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 1460 may visually provide information to the outside (e.g., a user) of the electronic device 1401. The display device 1460 may include, for example, a display, a hologram device, or a projector and control circuitry to control a corresponding one of the display, hologram device, and projector. The display device 1460 may include touch circuitry adapted to detect a touch, or sensor circuitry (e.g., a pressure sensor) adapted to measure the intensity of force incurred by the touch.

The audio module 1470 may convert a sound into an electrical signal and vice versa. The audio module 1470 may obtain the sound via the input device 1450 or output the sound via the sound output device 1455 or a headphone of an external electronic device 1402 directly (e.g., wired) or wirelessly coupled with the electronic device 1401.

The sensor module 1476 may detect an operational state (e.g., power or temperature) of the electronic device 1401 or an environmental state (e.g., a state of a user) external to the electronic device 1401, and then generate an electrical signal or data value corresponding to the detected state. The sensor module 1476 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1477 may support one or more specified protocols to be used for the electronic device 1401 to be coupled with the external electronic device 1402 directly (e.g., wired) or wirelessly. The interface 1477 may include, for example, a high- definition multimedia interface (HDMI), a universal serial bus (USB) interface, a secure digital (SD) card interface, or an audio interface.

A connecting terminal 1478 may include a connector via which the electronic device 1401 may be physically connected with the external electronic device 1402. The connecting terminal 1478 may include, for example, an HDMI connector, a USB connector, an SD card connector, or an audio connector (e.g., a headphone connector).

The haptic module 1479 may convert an electrical signal into a mechanical stimulus (e.g., a vibration or a movement) or an electrical stimulus which may be recognized by a user via tactile sensation or kinesthetic sensation. The haptic module 1479 may include, for example, a motor, a piezoelectric element, or an electrical stimulator.

The camera module 1480 may capture a still image or moving images. The camera module 1480 may include one or more lenses, image sensors, image signal processors, or flashes. The power management module 1488 may manage power supplied to the electronic device 1401. The power management module 1488 may be implemented as at least part of, for example, a power management integrated circuit (PMIC).

The battery 1489 may supply power to at least one component of the electronic device 1401. The battery 1489 may include, for example, a primary cell which is not rechargeable, a secondary cell which is rechargeable, or a fuel cell.

The communication module 1490 may support establishing a direct (e.g., wired) communication channel or a wireless communication channel between the electronic device 1401 and the external electronic device (e.g., the electronic device 1402, the electronic device 1404, or the server 1408) and performing communication via the established communication channel. The communication module 1490 may include one or more communication processors that are operable independently from the processor 1420 (e.g., the AP) and supports a direct (e.g., wired) communication or a wireless communication. The communication module 1490 may include a wireless communication module 1492 (e.g., a cellular communication module, a short-range wireless communication module, or a global navigation satellite system (GNSS) communication module) or a wired communication module 1494 (e.g., a local area network (LAN) communication module or a power line communication (PLC) module). A corresponding one of these communication modules may communicate with the external electronic device via the first network 1498 (e.g., a short-range communication network, such as BLUETOOTH™, wireless-fidelity (Wi-Fi) direct, or a standard of the Infrared Data Association (IrDA)) or the second network 1499 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 1492 may identify and authenticate the electronic device 1401 in a communication network, such as the first network 1498 or the second network 1499, using subscriber information (e.g., international mobile subscriber identity (IMSI)) stored in the subscriber identification module 1496.

The antenna module 1497 may transmit or receive a signal or power to or from the outside (e.g., the external electronic device) of the electronic device 1401. The antenna module 1497 may include one or more antennas, and, therefrom, at least one antenna appropriate for a communication scheme used in the communication network, such as the first network 1498 or the second network 1499, may be selected, for example, by the communication module 1490 (e.g., the wireless communication module 1492). The signal or the power may then be transmitted or received between the communication module 1490 and the external electronic device via the selected at least one antenna.

Commands or data may be transmitted or received between the electronic device 1401 and the external electronic device 1404 via the server 1408 coupled with the second network 1499. Each of the electronic devices 1402 and 1404 may be a device of a same type as, or a different type, from the electronic device 1401. All or some of operations to be executed at the electronic device 1401 may be executed at one or more of the external electronic devices 1402, 1404, or 1408. For example, if the electronic device 1401 should perform a function or a service automatically, or in response to a request from a user or another device, the electronic device 1401, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 1401. The electronic device 1401 may provide the outcome, with or without further processing of the outcome, as at least part of a reply to the request. To that end, a cloud computing, distributed computing, or client-server computing technology may be used, for example.

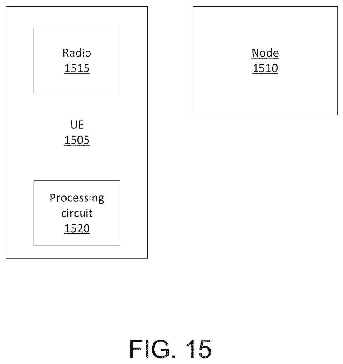

FIG. 15 is a block diagram of a system including a UE and a network node in communication with each other, according to an embodiment.

FIG. 15 shows a system including a UE 1505 and a gNB 1510, in communication with each other. The UE may include a radio 1515 and a processing circuit (or a means for processing) 1520, which may perform various methods disclosed herein, e.g., the methods illustrated in FIGS. 6-13. For example, the processing circuit 1520 may receive, via the radio 1515, transmissions from the network node (gNB) 1510, and the processing circuit 1520 may transmit, via the radio 1515, signals to the gNB 1510.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

**Claims**

1. A method performed by a user equipment, UE, in a wireless communication system, the method comprising:

   receiving (1301a), from a network node, an indication of a synchronization signal block, SSB, associated with an on-demand system information block 1, OD-SIB1, cell provided in a master information block, MIB, or as a reserved value in a search space configuration;
   determining (1302a), based on a wake-up signal, WUS, configuration from an anchor cell, whether the SSB corresponds to the OD-SIB1 cell;
   transmitting (1303a), to the network node, a request for OD-SIB1 transmission based on the determination; and
   receiving (1304a) an OD-SIB1 from the OD-SIB1 cell.

2. The method of claim 1, wherein the MIB comprises a $K_{SSB}$ bit field configured to indicate an OD-SIB1 cell.

3. The method of claim 2, wherein $K_{SSB} > 23$ indicates an OD-SIB1 cell in FR1, Frequency Range 1.

4. The method of claim 2 or 3, wherein $K_{SSB} > 11$ indicates an OD-SIB1 cell in FR2, Frequency Range 2.

5. The method of any one of claims 1 to 4, wherein the WUS configuration received from the anchor cell includes an association between one or more uplink preamble resources and a corresponding OD-SIB1 cell.

6. The method of claim 5, wherein the WUS configuration includes a search space for receiving a random access response, RAR, from the OD-SIB1 cell, and in a case in which the search space is not provided, the UE uses search space zero for the OD-SIB1 cell.

7. The method of any one of claims 1 to 6, wherein the request for OD-SIB1 transmission is performed via a physical random access channel, PRACH, transmission configured in the WUS configuration.

8. The method of any one of claims 1 to 7, wherein receiving the OD-SIB1 further comprises monitoring a downlink control information, DCI, message scrambled using a system information radio network temporary identifier, SI-RNTI, associated with the OD-SIB1 cell.

9. The method of any one of claims 1 to 8, wherein the OD-SIB1 is received within a preconfigured time offset from the UE's transmission of the request.

10. A user equipment, UE, comprising:

    a processor (1420); and
    a memory (1430) storing instructions that, when executed by the processor (1420), cause the UE (1401) to carry out the method according to any one of claims 1 to 9.

Case 1

NES Cell

1. UL WUS config

2. UL WUS

3. OD-SIB-1

4. RA

Standalone Solution

FIG. 1A

Case 2

Anchor (Cell A)          NES Cell

1. UL WUS config

2. UL WUS

3. OD-SIB-1

4. RA

Multi-cell/carrier solution
OD-SIB-1 on NES cell

FIG. 1B

Case 3

Anchor (Cell A)          NES Cell

1. UL WUS config

2. UL WUS

3. OD-SIB-1

4. RA

Multi-cell/carrier solution
OD-SIB-1 on anchor

FIG. 1C

Non-anchor cell

3. On-demand SIB1

uX

2. UL WUS Tx

1. UL WUS config

Anchor cell

FIG. 2

Non-anchor cell

The advantage:
Non-anchor cell can be in fully sleep UL

4. On-demand SIB1

3. Non-anchor uX
Cell Activation

1. UL WUS config

2. UL WUS
Transmission

Anchor cell

FIG. 3

Non-anchor cell

The advantage:
Non-anchor cell can be in fully sleep DL and UL
(except DL SSB)

uX

1. UL WUS config

2. UL WUS
Transmission

3. On-demand SIB1

Anchor cell

FIG. 4

Non-anchor cell

3. On-demand SIB1

2. UL WUS Tx

1. UL WUS config

Anchor cell

FIG. 5

601

Obtain MIB

602

ssb-
SubcarrierOffset
set to 15(31) ?

No → Legecy Cell: no OD-SIB1

603

Yes

604

ODSIB1Enabled
set to 1 ?

No → Legecy Cell: no OD-SIB1

605

Yes

606

Obtain WUS config

607

Obtain OD-SIB1 config

608

Request OD-SIB1

609

Receive OD-SIB1

FIG. 6

701

Cell Search

702

If detected a cell A?

No → UE operation according not involving WUS

703

Yes

704

Obtain WUS config

705

Obtain OD-SIB1 config

706

Select a NES cell to wake up based on SSB measurement

707

Request OD-SIB1 to a specific NES cell

708

Receive OD-SIB1 from that NES cell

FIG. 7

801

Obtain MIB

802

803

ssb-SubcarrierOffset set to 14(30) ?

No

Legecy Cell: no OD-SIB1

804

Yes

Obtain WUS config

805

Obtain OD-SIB1 config

806

Request OD-SIB1

807

Receive OD-SIB1

FIG. 8

901

Obtain MIB

902

ssb-SubcarrierOffset set to 30>Kssb >=24 in FR1 and 14>Kssb >=12 in FR2?

No → 903 Legecy Cell: no OD-SIB1

Yes

904

Obtain WUS config from Anchor cell

905

WUS config indicates OD-SIB1 is enabled?

No → 906 Legecy Cell: no OD-SIB1

Yes

907

Obtain OD-SIB1 config from anchor cell

908

Request OD-SIB1

909

Receive OD-SIB1

FIG. 9

1001

Attempt to detect SSB on legacy sync raster

1002

Detect a suitable legacy cell?

Yes → 1003 Obtain SIB1 through legacy procedure

No

1004

Attempt to detect SSB on off sync raster

1005

Detect a suitable NES cell?

No → 1006 No Service

Yes

Obtain WUS configuration —— 1007

Obtain OD-SIB1 configuration —— 1008

Request OD-SIB1 —— 1009

Receive OD-SIB1 —— 1010

FIG. 10

FIG. 11

1201

NES UE blindly decodes SI-RNTI
and SI-RNTI-NES scrambling DCI
1_0 to decode SIB1

1202

NES detects
SI-RNTI-NES
scrambling DCI 1_0?

No → 1203

NES UE performs legacy procedure
to receive SIB1 from legacy cell

Yes

1204

Detected NES cell
meets cell
reselection criteria?

No

Yes

1205

Obtain WUS config

1206

Obtain OD-SIB1 config

1207

Request OD-SIB1

1208

Receive OD-SIB1

FIG. 12

Receive indication of
SSB associated with OD-
SIB1 cell
1301a

Determine whether SSB
corresponds to OD-SIB1
cell
1302a

Transmit a request for
OD-SIB1 transmission
1303a

Receive OD-SIB1 from
OD-SIB1 cell
1304a

FIG. 13A

Transmit a WUS to
initiate an OD-SIB1
request
1301b

Receive an indication of
an OD-SIB1 transmission
opportunity
corresponding to the
transmitted WUS
1302b

Decode an OD-SIB1
based on the received
indication
1303c

# FIG. 13B

**1400**

Electronic Device
1401

Processor 1420
- Main Processor 1421
- Auxiliary Processor 1423

Memory 1430
- Volatile Memory 1432
- Non-Volatile Memory 1434
  - Internal Memory 1436
  - External Memory 1438

Program 1440
- Operating System 1442
- Middleware 1444
- Application 1446

Input Device 1450

Sound Output Device 1455

Display Device 1460

Audio Module 1470

Sensor Module 1476

Interface 1477

Haptic Module 1479

Camera Module 1480

Power Management Module 1488

Battery 1489

Communication Module 1490
- Wireless Communication Module 1492
- Wired Communication Module 1494

Connecting Terminal 1478

Subscriber Identification Module 1496

Antenna Module 1497

Network 1499

Electronic Device 1404

Server 1408

Electronic Device 1402

1498

FIG. 14

Radio
1515

UE
1505

Processing
circuit
1520

Node
1510

FIG. 15

Europäisches
Patentamt

European
Patent Office

Office européen
des brevets

# EUROPEAN SEARCH REPORT

**Application Number**

EP 25 17 5615

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HYOUNGJU JI ET AL: "On-demand SIB1 for idle/inactive mode UEs", 3GPP DRAFT; R1-2400741; TYPE DISCUSSION; NETW_ENERGY_NR_ENH-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. RAN WG1, no. Athens, GR; 20240226 - 20240301 19 February 2024 (2024-02-19), XP052568520, Retrieved from the Internet: URL:https://www.3gpp.org/ftp/TSG_RAN/WG1_R L1/TSGR1_116/Docs/R1-2400741.zip [retrieved on 2024-02-19] | 1,7,10 | INV. H04W48/12 H04W48/14 H04W52/02 ADD. H04W74/0833 |
| Y | * 3 Multi-cell operation for on-demand SIB1 * * figures 1, 2 * * 5 Conclusion * ----- -/-- | 2-6,8,9 | |

**TECHNICAL FIELDS SEARCHED (IPC)**

H04W

The present search report has been drawn up for all claims

| Place of search | Date of completion of the search | Examiner |
|---|---|---|
| Munich | 3 September 2025 | Matt, Stefan |

EPO FORM 1503 03.82 (P04C01)

Europäisches
Patentamt

European
Patent Office

Office européen
des brevets

## EUROPEAN SEARCH REPORT

**Application Number**

EP 25 17 5615

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PRAVJYOT SINGH DEOGUN ET AL: "Discussion on on-demand SIB1 for UEs in idle/inactive mode", 3GPP DRAFT; R1-2402829; TYPE DISCUSSION; NETW_ENERGY_NR_ENH-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. RAN WG1, no. Changsha, Hunan Province, CN; 20240415 - 20240419 5 April 2024 (2024-04-05), XP052586822, Retrieved from the Internet: URL:https://www.3gpp.org/ftp/TSG_RAN/WG1_R L1/TSGR1_116b/Docs/R1-2402829.zip [retrieved on 2024-04-05] | 1,7,10 | |
| Y | * 2.2 Wake-up-signal configuration provisioning * <br> * 2.3 Indication of on-demand SIB1 * <br> * 3 Conclusion * <br> ----- | 2-6,8,9 | |
| X | WO 2024/035018 A1 (LG ELECTRONICS INC [KR]) 15 February 2024 (2024-02-15) <br> * abstract * <br> & EP 4 572 421 A1 (LG ELECTRONICS INC [KR]) 18 June 2025 (2025-06-18) <br> * abstract * <br> * paragraph [0123] - paragraph [0129] * <br> * paragraph [0132] * <br> * paragraph [0142] * <br> * paragraph [0161] - paragraph [0176] * <br> ----- <br> -/-- | 1,10 | |

**TECHNICAL FIELDS SEARCHED (IPC)**

The present search report has been drawn up for all claims

| Place of search | Date of completion of the search | Examiner |
|---|---|---|
| Munich | 3 September 2025 | Matt, Stefan |

EPO FORM 1503 03.82 (P04C01)

Europäisches
Patentamt

European
Patent Office

Office européen
des brevets

# EUROPEAN SEARCH REPORT

**Application Number**

EP 25 17 5615

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PATRICK MERIAS ET AL:  "FL summary 3 for on-demand SIB1 in idle/inactive mode", 3GPP DRAFT; R1-2401663; TYPE DISCUSSION; NETW_ENERGY_NR_ENH-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. RAN WG1, no. Athens, GR; 20240226 - 20240301 1 March 2024 (2024-03-01), XP052577729, Retrieved from the Internet: URL:https://www.3gpp.org/ftp/TSG_RAN/WG1_R L1/TSGR1_116/Docs/R1-2401663.zip [retrieved on 2024-03-01] * 1.page: Scenario 1a, 2 * * 2.page: table (indication of WUS configuration) * * 26.page: FL Proposal 4-1-v4 * * 31.page: FL Proposal 6-1-v3 * * 35.page: FL Proposal 7-1-v3 * * 42.page FL Proposal 10-1-v3 * ----- -/-- | 1,8-10 | |

TECHNICAL FIELDS
SEARCHED     (IPC)

The present search report has been drawn up for all claims

| Place of search | Date of completion of the search | Examiner |
|---|---|---|
| Munich | 3 September 2025 | Matt, Stefan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt
European
Patent Office
Office européen
des brevets

# EUROPEAN SEARCH REPORT

**Application Number**

EP 25 17 5615

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NAVEEN PALLE ET AL: "Discussion on RAN2 work of on-demand SIB1", 3GPP DRAFT; R2-2402859; TYPE DISCUSSION; NETW_ENERGY_NR_ENH-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. RAN WG2, no. Changsha, Hunan Province, CN; 20240415 - 20240419 5 April 2024 (2024-04-05), XP052584816, Retrieved from the Internet: URL:https://www.3gpp.org/ftp/TSG_RAN/WG2_RL2/TSGR2_125bis/Docs/R2-2402859.zip [retrieved on 2024-04-05] * 2.1 Overall procedure * * 2.page: scenarios 1a, 2 * * 2.2 Contents of UL WUS configuration * * 6.page: figure 1 * * 2.4 On-demand SIB1 acquisition procedure * * 8.page figure 2 * * 3 Conclusion * ----- | 1,5-7,10 | |

**TECHNICAL FIELDS SEARCHED (IPC)**

The present search report has been drawn up for all claims

| Place of search | Date of completion of the search | Examiner |
|---|---|---|
| Munich | 3 September 2025 | Matt, Stefan |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

& : member of the same patent family, corresponding
 document

EPO FORM 1503 03.82 (P04C01)

## ANNEX TO THE EUROPEAN SEARCH REPORT
## ON EUROPEAN PATENT APPLICATION NO.

EP 25 17 5615

03-09-2025

| Patent document cited in search report | Publication date | Patent family member(s) | Publication date |
|---|---|---|---|
| WO 2024035018 A1 | 15-02-2024 | CN 119678579 A | 21-03-2025 |
| | | EP 4572421 A1 | 18-06-2025 |
| | | KR 20250048234 A | 08-04-2025 |
| | | WO 2024035018 A1 | 15-02-2024 |